Europäisches Patentamt

(19) European Patent Office

Office européen des brevets

(11) **EP 1 246 389 B1**

(12) **EUROPEAN PATENT SPECIFICATION**

(45) Date of publication and mention
of the grant of the patent:
**05.01.2005 Bulletin 2005/01**

(51) Int Cl.$^7$: **H04L 9/06**

(21) Application number: **02076082.3**

(22) Date of filing: **20.03.2002**

(54) **Apparatus for selectably encrypting or decrypting data**

Vorrichtung zur wählbaren Ver- bzw. Entschlüsselung von Daten

Dispositif permettant de façon sélectionnable le chiffrement ou le déchiffrement des données

(84) Designated Contracting States:
**AT BE CH CY DE DK ES FI FR GB GR IE IT LI LU MC NL PT SE TR**

(30) Priority: **27.03.2001 GB 0107592**
**04.04.2001 GB 0108392**

(43) Date of publication of application:
**02.10.2002 Bulletin 2002/40**

(73) Proprietor: **Amphion Semiconductor Limited Belfast BT9 5BS (GB)**

(72) Inventors:
• **McCanny, John Vincent**
**Newtownards, County Down BT23 7UF (GB)**
• **McLoone, Maire Patricia**
**Glenties, County Donegal (IE)**

(74) Representative: **Wallace, Alan**
**F. R. Kelly & Co.**
**4 Mount Charles**
**Belfast BT7 1NZ, Northern Ireland (GB)**

(56) References cited:
• **MCLOONE M ; MCCANNY J V : "High performance single-chip FPGA Rijndael algorithm implementations " CRYPTOGRAPHIC HARDWARE AND EMBEDDED SYSTEMS - CHES 2001. PROCEEDINGS (LECTURE NOTES IN COMPUTER SCIENCE VOL.2162), 16 May 2001 (2001-05-16), pages 65-76, XP002203795 Berlin, Germany, Springer-Verlag ISBN: 3-540-42521-7**
• **MCLOONE M ; MCCANNY J V : " Rijndael FPGA implementation utilizing look-up tables " 2001 IEEE WORKSHOP ON SIGNAL PROCESSING SYSTEMS. SIPS 2001., 28 September 2001 (2001-09-28), pages 349-360, XP002203796 Piscataway, NJ, USA, IEEE, USA ISBN: 0-7803-7145-3**
• **FISCHER V: "Realization of the Round 2 AES Candidates using Altera FPGA" MICRONIC S.R.O., [Online] 2000, pages 1-15, XP002203797 Dunajská 12, Kosice, Slovakia Retrieved from the Internet: <URL:http://citeseer.nj.nec.com/cs> [retrieved on 2002-06-27]**
• **MCLOONE M ; MCCANNY J V : " A high performance FPGA implementation of DES " 2000 IEEE WORKSHOP ON SIGNAL PROCESSING SYSTEMS. SIPS 2000, 13 October 2000 (2000-10-13), pages 374-383, XP002203798 Piscataway, NJ, USA, IEEE, USA ISBN: 0-7803-6488-0**
• **SCHNEIER B: "Applied cryptography, second edition" APPLIED CRYPTOGRAPHY. PROTOCOLS, ALGORITHMS, AND SOURCE CODE IN C, NEW YORK, JOHN WILEY & SONS, US, 1996, pages 298-300, XP002203799 ISBN: 0-471-11709-9**

# EP 1 246 389 B1

**Description**

FIELD OF THE INVENTION

The present invention relates to the field of data encryption. The invention relates particularly to an apparatus for data encryption and data decryption according to private key, or symmetric key, data encryption algorithms.

BACKGROUND TO THE INVENTION

Secure or private communication, particularly over a telephone network or a computer network, is dependent on the encryption, or enciphering, of the data to be transmitted. One type of data encryption, commonly known as private key encryption or symmetric key encryption, involves the use of a key, normally in the form of a pseudo-random number, or code, to encrypt data in accordance with a selected data encryption algorithm (DEA). To decipher the encrypted data, a receiver must know and use the same key in conjunction with the inverse of the selected encryption algorithm. Thus, anyone who receives or intercepts an encrypted message cannot decipher it without knowing the key.
Data encryption is used in a wide range of applications including IPSec Protocols, ATM Cell Encryption, Secure Socket Layer (SSL) protocol and Access Systems for Terrestrial Broadcast. In many applications, the encryption and/or decryption is performed in real-time and so it is desirable to perform the encryption and/or decryption as quickly as possible. It is also desirable for a data encryption apparatus to be able to perform both encryption and decryption.
In September 1997 the National Institute of Standards and Technology (NIST) issued a request for candidates for a new Advanced Encryption Standard (AES) to replace the existing Data Encryption Standard (DES). A data encryption algorithm commonly known as the Rijndael Block Cipher was selected for the new AES.
There is a need therefore for a data encryption apparatus that performs data encryption and data decryption, preferably in accordance with the Rijndael algorithm, and at a rate that is suitable for commercial applications, particularly real-time applications.
Fischer V "Realization of the Round 2 AES Candidates using Altera FPGA" Micronic S.R.O., [online] 2000, pages 1-15 (XP002203797 Dunajska 12, Kosice, Slovakia) discloses the use of Look-Up Tables (LUTs) to implement a portion of the Rijndael algorithm, namely the s-box. Fischer teaches the use of separate s-boxes for encryption and decryption. It is also known from McLoone M and McCanny JV "A high performance FPGA implementation of DES" from the 2000 IEEE workshop on signal processing systems, SIPS 2000, October 13, 2000 (XP002203798 Piscataway, NJ, USA, IEEE, USA ISBN: 0-7803-6488-0) that a portion of the DES encryption algorithm, namely the s-box, may be implemented using a Look-Up Table (LUT). Schneier B "Applied Cryptography, second edition" John Wiley & Sons, US, 1996 (XP002203799, ISBN: 0-471-11709-9) discloses on pages 298-300 the use of loadable s-boxes in DES chips.
It would be desirable to improve upon the respective apparatus disclosed in the above-identified references.

Summary of the Invention

Accordingly, one aspect of the present invention provides an apparatus for selectably encrypting or decrypting data in accordance with a private or symmetric key encryption/decryption algorithm in which at least some data transformations differ between encryption and decryption, the apparatus being arranged to receive a control signal for selecting between encryption and decryption, the apparatus comprising at least one data processing module arranged to perform one or more data encryption or data decryption operations depending on the setting of said control signal, wherein at least part of said at least one data processing module comprises one or more programmable Look-up Tables (LUTs), characterised in that the apparatus further comprises at least one storage device for storing a first set and a second set of LUT values, the apparatus being arranged to program some or all of said LUTs with said first set of LUT values when said control signal is set to encrypt, and to program some or all of said LUTs with said second set of LUT values when said control signal is set to decrypt.
In the preferred embodiment, the apparatus comprises a plurality of LUTs all of which are programmed with said first set of LUT values during encryption and programmed with said second set of LUT values during decryption. In an alternative embodiment, the apparatus comprises a plurality of LUTs and the first and second sets of LUT values each comprise a plurality of respective sub-sets of LUT values. During encryption, some of LUTs are programmed with a respective one of the sub-sets of LUT values belonging to said first set. During decryption, all of the LUTs are programmed with a respective of the sub-sets of LUT values belonging to said second set.
Preferably, the apparatus comprises a plurality of instances of a data processing module arranged in a data processing pipeline.
Preferably, the apparatus is arranged to perform encryption or decryption in accordance with the Rijndael Block Cipher, wherein the data processing module is arranged to implement a Rijndael round. More preferably, the data processing module is arranged to implement the ByteSub transformation of the Rijndael round in at least one LUT. Preferably, said first set of LUT values is arranged to program a LUT to implement the Rijndael ByteSub transformation and said second set of LUT values is arranged to program a LUT to implement the inverse of the Rijndael ByteSub transformation. Preferably, the data processing module includes a respective LUT for each byte of an input data block.

In the alternative embodiment, the entire Rijndael round is implemented using LUTs.

Preferably, the first and second set of LUT values are stored in respective first and second storage devices and the apparatus further includes a 2-to-1 selector switch operable by said control signal to select said first storage device when the control signal is set to encode, and to select said second storage device when the control signal is set to decode. More preferably, the apparatus includes two or more sets of a first and a second storage device, each first and second storage device storing said first and second set of LUT values respectively, the apparatus further including a respective 2-to-1 selector switch for each set of first and second storage device. Preferably, said first and second storage devices are implemented by means of respective Read Only Memories (ROMs).

Alternatively, said first and second sets of LUT values are stored in respective storage locations of a single storage device and are selectable by a 2-to-1 selector switch.

Preferably, each LUT is implemented by means of a programmable Random Access Memory (RAM) or a programmable Read Only Memory (ROM).

Preferably, the apparatus is implemented on a Field Programmable Gate Array.

The invention further provides a computer program product comprising computer useable instructions arranged to generate, in whole or in part, an apparatus according to the invention. The apparatus may therefore be implemented as a set of suitable computer programs. Typically, the computer program takes the form of a hardware description, or definition, language (HDL) which, when synthesised using conventional hardware synthesis tools, generates semiconductor chip data, such as mask definitions or other chip design information, for generating a semiconductor chip. The invention also provides said computer program stored on a computer useable medium. The invention further provides semiconductor chip data, stored on a computer usable medium, arranged to generate, in whole or in part, an apparatus according to the invention.

In the following description of preferred embodiments of the invention, a fully pipelined data encryption and decryption apparatus is presented in the context of implementing the Rijndael algorithm. A skilled person will appreciate that at least some of the aspects of the present invention may equally be employed in the implementation of other private key, or symmetric key, encryption/decryption algorithms in which at least some of the data transformations differ between encryption and decryption. The Serpent Algorithm is an example of such an algorithm.

The apparatus, or cores, are conveniently implemented using Foundation Series 2.1i software on the Virtex-E (Trade Mark) FPGA (Field Programmable Gate Array) family of devices as produced by Xilinx of San Jose, California, USA (www.xilinx.com). A fully pipelined Rijndael data encryption/decryption apparatus requires considerable memory, hence, its implementation is ideally suited to the Virtex-E range of FPGAs, which contain devices with up to 280 RAM Blocks (BRAMs). In the preferred embodiment, the apparatus is implemented on a Virtex XCV3200E-8-CG1156 FPGA device. There are no known single-chip FPGA implementations of the Rijndael algorithm, which perform both encryption and decryption.

Other aspects of the invention will be apparent to those ordinarily skilled in the art upon review of the following description of specific embodiments and with reference to the accompanying drawings.

BRIEF DESCRIPTION OF THE DRAWINGS

Embodiments of the invention are now described by way of example and with reference to the accompanying drawings in which:

Figure 1a is a representation of data bytes arranged in a State rectangular array;

Figure 1b is a representation of a cipher key arranged in a rectangular array;

Figure 1c is a representation of an expanded key schedule;

Figure 2 is a schematic illustration of the Rijndael Block Cipher;

Figure 3 is a schematic illustration of a normal Rijndael Round;

Figure 4 is a schematic representation of a preferred embodiment of an apparatus according to the invention;

Figure 5 is a schematic representation of a data processing module included in the apparatus of Figure 4;

Figure 5a is a schematic representation of a MixCol transformation module included in the data processing module of Figure 5;

Figure 6 is a representation of a data block in State form;

Figure 7 is a table of LUT values for use during encryption;

Figure 8 shows computer program code for implementing a multiplier block;

Figure 9 shows a flow chart for implementing the Rijndael key schedule for a 128-bit cipher key;

Figure 9a shows a flow chart for implementing the Rijndael key schedule for a 192-bit cipher key;

Figure 9b shows a flow chart for implementing the Rijndael key schedule for a 256-bit cipher key;

Figure 10 is a table of LUT values for use during data decryption;

Figure 11 is a schematic representation of an arrangement for initialising LUTs according to the invention;

Figure 12a is a schematic representation of the normal Rijndael Round for use during encryption by an alternative embodiment of the invention;

Figure 12b is a schematic representation of the normal Rijndael Round for use during decryption by an alternative embodiment of the invention;

Figure 13 is a schematic representation of a Rijndael Round module for implementing data encryption in the alternative embodiment of the invention;

Figure 14 is a table of LUT values for use in the module of Figure 13;

Figure 15 is a second table of LUT values for use in the module of Figure 13; and

Figure 16 is a schematic representation of a Rijndael Round module for implementing data decryption in the alternative embodiment of the invention;

DETAILED DESCRIPTION OF THE DRAWINGS

1. The Rijndael Algorithm

The Rijndael algorithm is a private key, or symmetric key, DEA and is an iterated block cipher. The Rijndael algorithm (hereinafter "Rijndael") is defined in the publication "The Rijndael Block Cipher: AES proposal" by J. Daemen and V. Rijmen presented at the First AES Candidate Conference (AES1) of August 20-22, 1998, the contents of which publication are hereby incorporated herein by way of reference.

In accordance with many private key DEAs, including Rijndael, encryption is performed in multiple stages, commonly known as iterations, or rounds. Such DEAs lend themselves to implementation using a data processing pipeline, or pipelined architecture. In a pipelined architecture, a respective data processing module is provided for each round, the data processing modules being arranged in series. A message to be encrypted is typically split up into data blocks that are fed in series into the pipeline of data processing modules. Each data block passes through each processing module in turn, the processing modules each performing an encryption operation (or a decryption operation) on each data block. Thus, at any given moment, a plurality of data blocks may be simultaneously processed by a respective processing module - this enables the message to be encrypted (and decrypted) at relatively fast rates.

Each processing module uses a respective sub-key, or round key, to perform its encryption operation. The round keys are derived from a primary key, or cipher key.

With Rijndael, the data block length and cipher key length can be 128, 192 or 256 bits. The NIST requested that the AES must implement a symmetric block cipher with a block size of 128 bits, hence the variations of Rijndael which can operate on larger block sizes do not form part of the standard itself. Rijndael also has a variable number of rounds namely, 10, 12 and 14 when the cipher key lengths are 128, 192 and 256 bits respectively. The following description of the invention relates primarily to an embodiments in which the apparatus is arranged to use a 128-bit cipher key although a skilled person will appreciate that alternative embodiments may readily be created to implement other key lengths, including 192 or 256 bits.

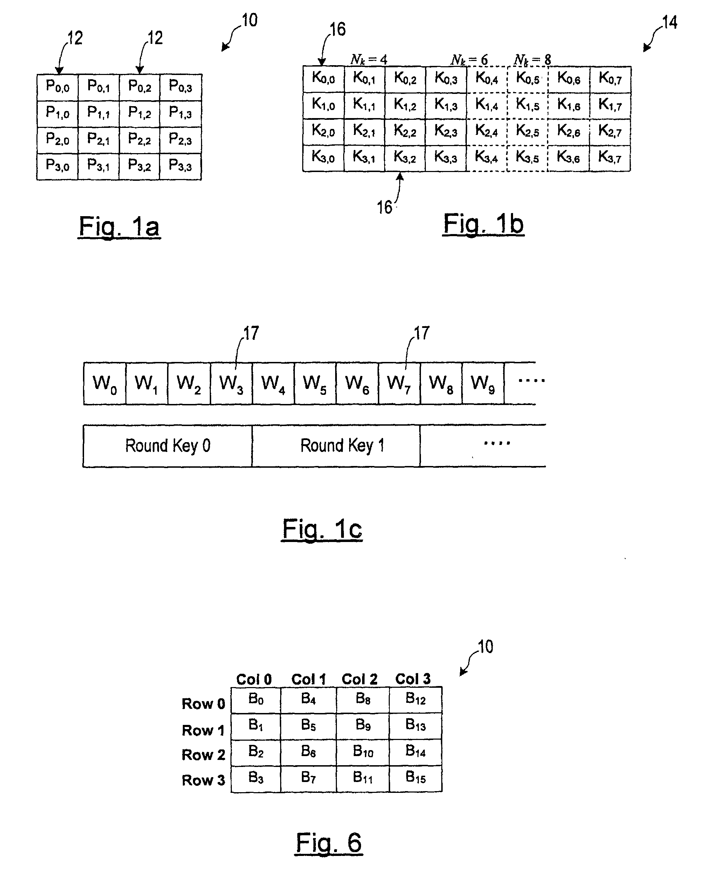

With reference to Figure 1a, the transformations performed during the Rijndael encryption operations consider a data block as a 4-column rectangular array, or State (generally indicated at 10 in Figure 1a), of 4-byte vectors 12. For example, a 128-bit plaintext (i.e. unencrypted) data block consists of 16 bytes, $B_0$, $B_1$, $B_2$, $B_3$, $B_4$... $B_{14}$, $B_{15}$. Hence, in the State 10, $B_0$ becomes $P_{0,0}$, $B_1$ becomes $P_{1,0}$, $B_2$ becomes $P_{2,0}$ ... $B_4$ becomes $P_{0,1}$ and so on.

With reference to Figure 1b, the cipher key is also considered to be a multi-column rectangular array 14 of 4-byte vectors 16, the number of columns, $N_k$, depending on the cipher key length. In Figure 1b, the vectors 16 headed by bytes $K_{0,4}$ and $K_{0,5}$ are present when the cipher key length is 192-bits or 256-bits, while the vectors 16 headed by bytes $K_{0,6}$ and $K_{0,7}$ are only present when the cipher key length is 256-bits.

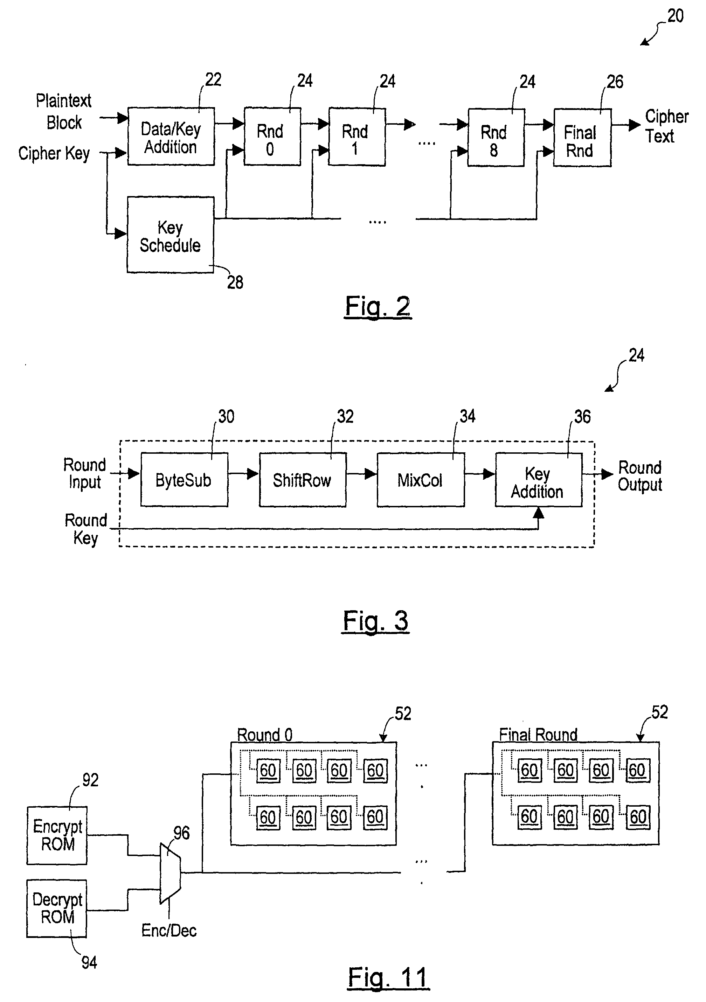

Referring now to Figure 2, there is shown, generally indicated at 20, a schematic representation of Rijndael. The algorithm design consists of an initial data/key addition operation 22, in which a plaintext data block is added to the cipher key, followed by nine, eleven or thirteen rounds 24 when the key length is 128-bits, 192-bits or 256-bits respectively and a final round 26, which is a variation of the typical round 24. There is also a key schedule operation 28 for expanding the cipher key in order to produce a respective different round key for each round 24, 26.

### 1.1 The Rijndael Round

Figure 3 illustrates the typical Rijndael round 24. The round 24 comprises a ByteSub transformation 30, a ShiftRow transformation 32, a MixColumn transformation 34 and a Round Key Addition 36. The ByteSub transformation 30, which is also known as the *s-box* of the Rijndael algorithm, operates on each byte in the State 10 independently.

In Rijndael, finite field mathematics is used when manipulating data. For example, a byte, ***b: b7 b6 b5 b4 b3 b2 b1 b0*** is considered as a polynomial with coefficients in the finite field, {0,1}. The polynomial may be represented as:

$$b_7x^7 + b_6x^6 + b_5x^5 + b_4x^4 + b_3x^3 + b_2x^2 + b_1x + b_0$$

This polynomial representation of the byte allows mathematical operations such as addition, multiplication and multiplicative inverse to be performed relatively simply. For example, the addition of two bytes is achieved by summing, modulo 2, the respective polynomial coefficients. In binary notation, this corresponds to a simple bitwise XOR operation. Finite field mathematics is well known and for further information reference is made to the publication "Introduction to Finite Fields and their Applications" by R. Lidl and H Niederreiter, Cambridge University Press, Revised Edition, 1994.

The s-box 30 involves finding the multiplicative inverse of each byte in the finite, or Galois, field $GF(2^8)$. An affine transformation is then applied, which involves multiplying the result of the multiplicative inverse by a matrix M (as defined in the Rijndael specification) and adding to the hexadecimal number '63' (as is stipulated in the Rijndael specification).

In the ShiftRow transformation 32, the rows of the State 10 are cyclically shifted to the left. Row 0 is not shifted, row 1 is shifted 1 place, row 2 by 2 places and row 3 by 3 places.

The MixColumn transformation 34 operates on the columns of the State 10. Each column, or 4-byte vector 12, is considered a polynomial over $GF(2^8)$ and multiplied modulo $x^4+1$ with a fixed polynomial $c(x)$, where,

$$c(x) = \text{'03'}x^3 + \text{'01'}x^2 + \text{'01'}x + \text{'02'} \tag{1}$$

(the inverted commas surrounding the polynomial coefficients signifying that the coefficients are given in hexidecimal).

Finally in Round Key Addition 36, the State 10 bytes and the round key bytes are added by a bitwise XOR operation.

In the final round 26, the MixColumn transformation 34 is omitted.

### 1.2 Key Schedule

The Rijndael key schedule 28 consists of two parts: Key Expansion and Round Key Selection. Key Expansion involves expanding the cipher key into an expanded key, namely a linear array 15 (Fig. 1c) of 4-byte vectors or words 17, the length of the array 15 being determined by the data block length, $N_b$, (in bytes) multiplied by the number of rounds, $N_r$, plus 1, i.e. array length = $N_b * (N_r + 1)$. In Rijndael, the data block length is four bytes, $N_b = 4$. When the key block length, $N_k = 4$, 6 and 8, the number of rounds is 10, 12 and 14 respectively. Hence the lengths of the expanded key are as shown in Table 1 below.

Table 1.

| Length of Expanded Key for Varying Key Sizes | | | |
|---|---|---|---|
| **Data Block Length, $N_b$** | 4 | 4 | 4 |
| **Key Block Length, $N_k$** | 4 | 6 | 8 |
| **Number of Rounds, $N_r$** | 10 | 12 | 14 |
| **Expanded Key Length** | *44* | *52* | *60* |

The first $N_k$ words of the expanded key comprise the cipher key. When $N_k = 4$ or 6, each subsequent word, W[i], is found by XORing the previous word, W[i-1], with the word $N_k$ positions earlier, W[i-$N_k$]. For words 17 in positions which are a multiple of $N_k$, a transformation is applied to W[i-1] before it is XORed. This transformation involves a cyclic shift of the bytes in the word 17. Each byte is passed through the Rijndael s-box 30 and the resulting word is XORed with a round constant stipulated by Rijndael (see *Rcon(i)* function described below). However, when $N_k = 8$, an additional transformation is applied: for words 17 in positions which are a multiple of $((N_k*i)+ 4)$, each byte of the word, W[i-1], is passed through the Rijndael s-box 30.

The round keys are selected from the expanded key 15. In a design with $N_r$ rounds, $N_r$ +1 round keys are required. For example a 10-round design requires 11 round keys. Round key 0 comprises words W[0] to W[3] of the expanded key 15 and is utilised in the initial data/key addition 22, round key 1 comprises W[4] to W[7] and is used in round 0, round key 2 comprises W[8] to W[11] and is used in round 1 and so on. Finally, round key 10 is used in the final round 26.

1.3 Decryption

The decryption process in Rijndael is effectively the inverse of its encryption process. Decryption comprises an inverse of the final round 26, inverses of the rounds 24, followed by the initial data/key addition 22. The data/key addition 22 remains the same as it involves an XOR operation, which is its own inverse. The inverse of the round 24, 26 is found by inverting each of the transformations in the round 24, 26. The inverse of ByteSub 30 is obtained by applying the inverse of the affine transformation and taking the multiplicative inverse in $GF(2^8)$ of the result. In the inverse of the ShiftRow transformation 32, row 0 is not shifted, row 1 is now shifted 3 places, row 2 by 2 places and row 3 by 1 place. The polynomial, *c(x)*, used to transform the State 10 columns in the inverse of MixColumn 34 is given by,

$$c(x) = \text{'0B'}x^3 + \text{'0D'}x^2 + \text{'09'}x + \text{'0E'} \qquad (2)$$

Similarly to the data/key addition 22, Round Key addition 36 is its own inverse. During decryption, the key schedule 28 does not change, however the round keys constructed for encryption are now used in reverse order. For example, in a 10-round design, round key 0 is still utilized in the initial data/key addition 22 and round key 10 in the final round 26. However, round key 1 is now used in round 8, round key 2 in round 7 and so on.

2. Implementation of the Rijndael algorithm

A number of different architectures can be considered when designing an apparatus or circuit for implementing encryption algorithms. These include Iterative Looping (IL), where only one data processing module is used to implement all of the rounds. Hence for an *n*-round algorithm, *n* iterations of that round are carried out to perform an encryption, data being passed through the single instance of data processing module *n* times. Loop Unrolling (LU) involves the unrolling of multiple rounds. Pipelining (P) is achieved by replicating the round i.e. devising one data processing module for implementing the round and using multiple instances of the data processing module to implement successive rounds. In such an architecture, data registers are placed between each data processing module to control the flow of data. A pipelined architecture generally provides the highest throughput. Sub-Pipelining (SP) is carried out on a partially pipelined design when the round is complex. It decreases the pipeline's delay between stages but increases the number of clock cycles required to perform an encryption. A fully pipelined architecture is preferred for the apparatus of the invention as this provides the highest throughput. It will be understood however that the invention may alternatively be applied to a sub-pipelined or iterative loop architecture.

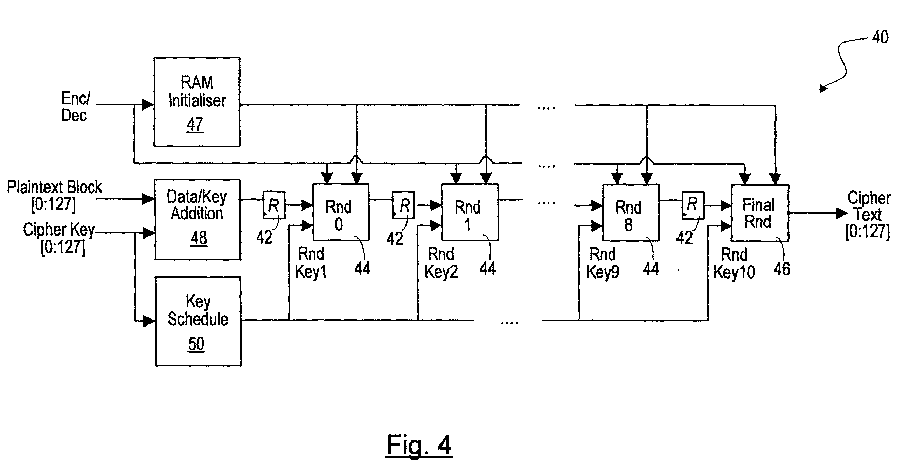

An embodiment of a data encryption and decryption apparatus according to the invention is now described. Figure 4 shows an apparatus, or core, generally indicated at 40, for selectably encrypting or decrypting data according to the invention.

The apparatus 40 comprises a fully pipelined architecture including a pipeline of data processing modules 44 (hereinafter 'round modules 44') each arranged to implement the typical Rijndael round 24 and a data processing module 46 (hereinafter 'round module 46') arranged to implement the Rijndael final round 26. Storage elements in the form of data registers 42 are provided before each round module 44, 46. For illustrative purposes, the apparatus 40 is shown as implementing ten rounds and so corresponds to the case where both the input plaintext block length and the cipher key length are 128-bits. It will be understood from the foregoing description that the number of rounds depends on the cipher key length.

The apparatus 40 also includes a data/key addition module 48 arranged to implement the data/key addition operation 22 and a key schedule module 50 arranged to implement the key schedule 28 operations.

The implementation of the modules 44, 46, 48 and 50 is now described in more detail.

The Data/Key Addition module 48 comprises an XOR component (not shown) arranged to perform a bitwise XOR operation of each byte $B_i$ of the State 10 comprising the input plaintext, with a respective byte $K_i$ of the cipher key.

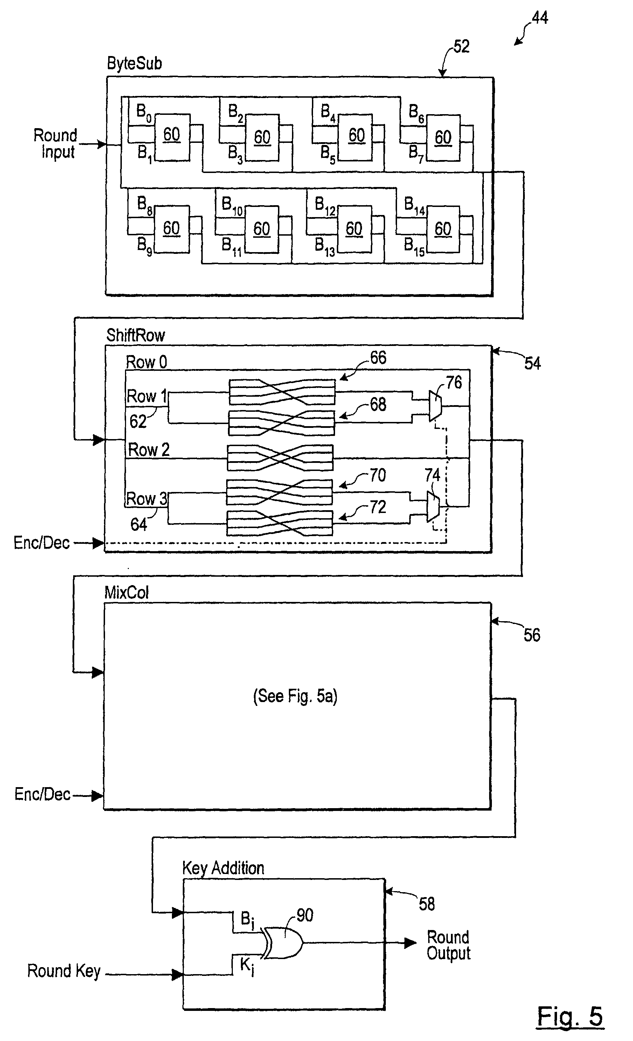

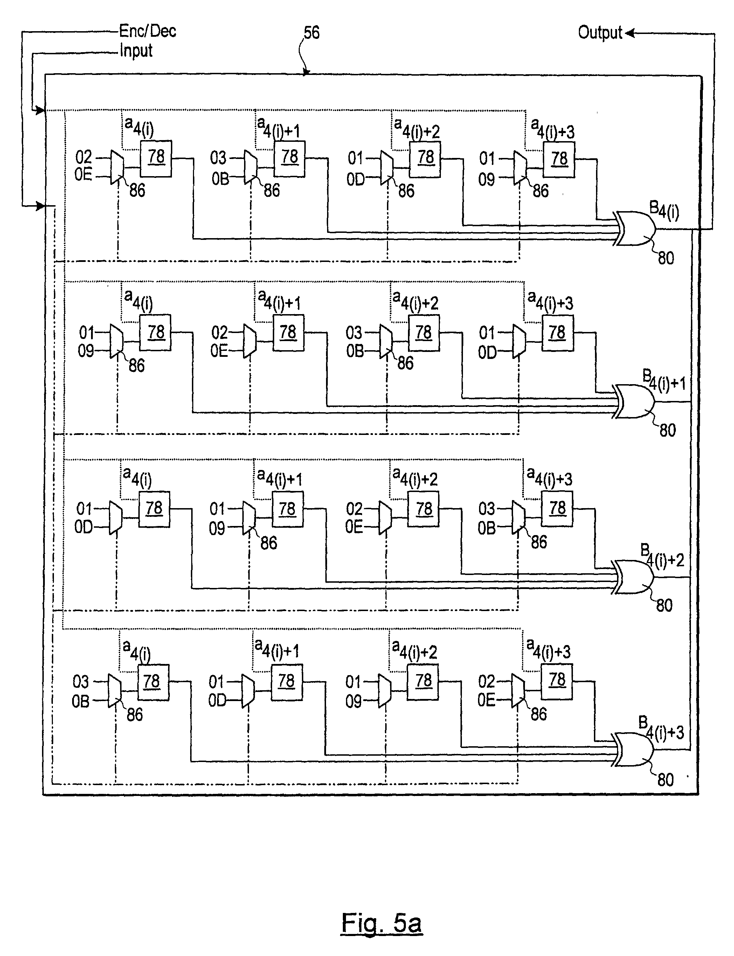

Referring now to Figure 5, there is shown a preferred implementation of the round module 44. The round module 44 includes a ByteSub module 52 arranged to implement the ByteSub transformation 30, a ShiftRow module 54 arranged to implement the ShiftRow transformation 32, a MixCol module 56 arranged to implement the MixCol transformation 34 and a Key addition module 58 arranged to implement the Key addition operation 36.

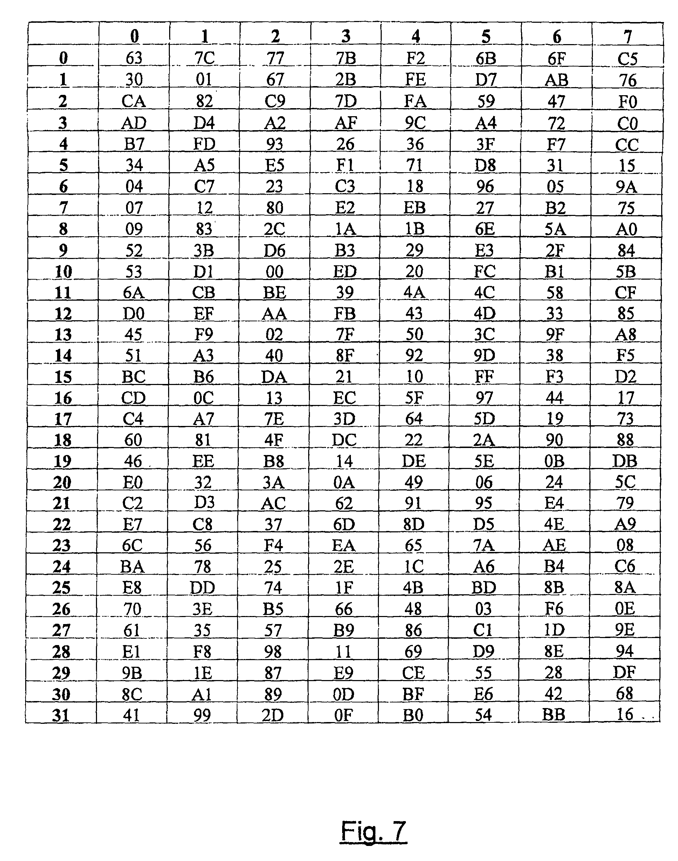

A major consideration in the design of the apparatus 40 is the memory requirement. The ByteSub module 52 is therefore advantageously implemented as one or more look-up tables (LUTs) or ROMs. This is a faster and more cost-effective (in terms of resources required) implementation than implementing the multiplicative inverse operation and affine transformation in logic. Figure 6 shows, as the round input, an example State 10 in which the sixteen data bytes are labeled $B_0$ to $B_{15}$. Since the State bytes $B_0$ to $B_{15}$ are operated on individually, each ByteSub module 52 requires sixteen 8-bit to 8-bit LUTs. The Xilinx Virtex-E (Trade Mark) range of FPGAs are preferred for implementation as it contains FPGA devices with up to 280 BlockSelectRAM (BRAM) (Trade Mark) storage devices, or memories. Conveniently, a single BRAM can be configured into two single port 256 x 8-bit RAMs (a description of how to use the Xilinx BRAM is given in the Xilinx Application Note XAPP130: Virtex Series; using the Virtex Block Select RAM + Features; **URL: http://www.xilinx.com;** March 2000). Hence, when using a Virtex FPGA, eight BRAMs are used in each ByteSub module 52 to implement the 16 LUTs, since each of the two RAMs in each respective BRAM can serve as an 8-bit to 8-bit LUT (when the write enable input of the RAM is low ('0'), transitions on the write clock input are ignored and data stored in the RAM is not affected. Hence, if the RAM is initialized and both the input data and write enable pins are held low, then the RAM can be utilized as a ROM or LUT). Figure 7 shows a table giving the hexadecimal values required in an LUT for implementing the ByteSub transformation 30 during Rijndael encryption. The values given in Figure 7 are set out in ascending order in rows reading from left to right. Thus, row 0 of the table gives the LUT outputs for input values from '00' to '07' (hexadecimal), row 1 gives the LUT output values for input values from '08' to '0F' and so on until row 31 gives the LUT output values for inputs 'F8' to 'FF'. For example, an input of '00' (hexidecimal) to the LUT returns the output '63' (hexidecimal), an input of '8A' (hexidecimal) to the LUT returns the output '7E' (hexidecimal) (row 17) and 'FF' gives the output '16'.

In Figure 5, the BRAMs are enumerated as 60. Each BRAM 60 in the ByteSub module 52 operates on two State bytes at a time. Each State byte $B_0$ to $B_{15}$ is provided as the input to a respective one of the 16 single port RAMs (not shown) provided by the 8 BRAMs 60. Thus, each BRAM 60 in the ByteSub module 52 operates on two State bytes at a time. The respective resulting outputs of the BRAMs 60 are then provided as the input to the ShiftRow module 54, again in State format as shown in Figure 6.

In the ShiftRow module 54, the required cyclical shifting on the rows of the State 10 is conveniently performed by appropriate hardwiring arrangements as shown in Figure 5. Row 1 and Row 3 of the State 10 are operated on differently during encryption and decryption. In the respective data lines 62, 64 for Row 1 and Row 3, the ShiftRow module 54 therefore includes selectable alternative hardwiring arrangements 66, 68 for Row 1 and 70, 72 for Row 3. The alternative hardwiring arrangements 66, 68 and 70, 72 are selectable via a respective switch, or 2-to-1 multiplexer 74, 76, depending on the setting of a control signal *Enc/Dec*. The control signal *Enc/Dec* is generated externally of the apparatus 40 and determines whether or not the apparatus 40 performs data encryption or data decryption. During encryption, hardwiring arrangement 66 is selected for data line 62 while hardwiring arrangement 70 is selected for data line 64. During decryption, hardwiring arrangement 68 is selected for data line 62 while hardwiring arrangement 72 is selected for data line 64. The resulting State 10 output from the Shiftrow module 54 is provided to the MixCol module 56, which is shown in Figure 5a.

The MixCol module 56 transforms each column (Col0 to Col3) of the State 10. Each column is considered a polynomial over $GF(2^8)$ and multiplied modulo $x^4+1$ with a fixed polynomial $c(x)$ as set out in equation [1] for encryption and equation [2] for decryption. This can be considered as a matrix multiplication as follows:

During encryption:

$$\begin{bmatrix} b_0 \\ b_1 \\ b_2 \\ b_3 \end{bmatrix} = \begin{bmatrix} 02 & 03 & 01 & 01 \\ 01 & 02 & 03 & 01 \\ 01 & 01 & 02 & 03 \\ 03 & 01 & 01 & 02 \end{bmatrix} \begin{bmatrix} a_0 \\ a_1 \\ a_2 \\ a_3 \end{bmatrix} \qquad [3]$$

During decryption:

$$\begin{bmatrix} b_0 \\ b_1 \\ b_2 \\ b_3 \end{bmatrix} = \begin{bmatrix} 0E & 0B & 0D & 09 \\ 09 & 0E & 0B & 0D \\ 0D & 09 & 0E & 0B \\ 0B & 0D & 09 & 0E \end{bmatrix} \begin{bmatrix} a_0 \\ a_1 \\ a_2 \\ a_3 \end{bmatrix} \qquad [4]$$

Where the input to the MixCol module 56 may be denoted in State format as follows:

|       | Col 0 | Col 1 | Col 2 | Col 3 |
|-------|-------|-------|-------|-------|
| Row 0 | $a_0$ | $a_4$ | $a_8$ | $a_{12}$ |
| Row 1 | $a_1$ | $a_5$ | $a_9$ | $a_{13}$ |
| Row 2 | $a_2$ | $a_6$ | $a_{10}$ | $a_{14}$ |
| Row 3 | $a_3$ | $a_7$ | $a_{11}$ | $a_{15}$ |

And the output of the output may be denoted in State format as:

|       | Col 0 | Col 1 | Col 2 | Col 3 |
|-------|-------|-------|-------|-------|
| Row 0 | $b_0$ | $b_4$ | $b_8$ | $b_{12}$ |
| Row 1 | $b_1$ | $b_5$ | $b_9$ | $b_{13}$ |
| Row 2 | $b_2$ | $b_6$ | $b_{10}$ | $b_{14}$ |
| Row 3 | $b_3$ | $b_7$ | $b_{11}$ | $b_{15}$ |

Equations [3] and [4] illustrate the matrix multiplication for the first column $[a_0\text{-}a_3]$ of the input State to produce the first column $[b_0\text{-}b_3]$ of the output State. The MixCol module 56 performs the same multiplication for the remaining columns of the input state to produce corresponding output State columns. The values given in the multiplication matrices in [3] and [4] correspond respectively with the coefficients of the fixed polynomial $c(x)$ given in equations [1] and [2]. These values are specific to the Rijndael algorithm.

The matrix multiplication required for the MixCol transformation can be implemented using sixteen $GF(2^8)$ 8-bit multiplier blocks 78 (Figure 5a) arranged in four columns of four. The MixCol module 56 operates on one column of the input State at a time. Each multiplier block 78 in each column operates on the same input State byte. Thus for the first input State column $[a_0\text{-}a_3]$, each of the multipliers 78 in the first column operate on $a_0$, the multipliers 78 in the second column operate on $a_1$ and so on. In general, the first column of multipliers 78 operates on input State byte $a_{4(i)}$, the second column of multipliers operate on input State byte $a_{4(i+1)}$, the third column on input State byte $a_{4(i+2)}$ and the

fourth column on input State byte $a_{4(i+3)}$, where i = 0 to 3 and corresponds to columns 1 to 4 of the input State. Each multiplier block 78 is also provided with a second input for receiving one of two possible multiplication coefficients whose respective values are determined by the multiplication matrices in [3] and [4]. For each multiplier block 78, the respective coefficients are selectable by means of a respective switch, or 2-to-1 multiplexer 86 that is operable by the control signal *Enc/Dec*. The output State is produced a column at a time $[b_{4(i)}, b_{4(i+1)}, b_{4(i+1)}, b_{4(i+1)}]$, for i = 0 to 3, where the first output State byte in each column is obtained by combining each of the first multiplier blocks 78 in each multiplier block column using a respective XOR gate 80.

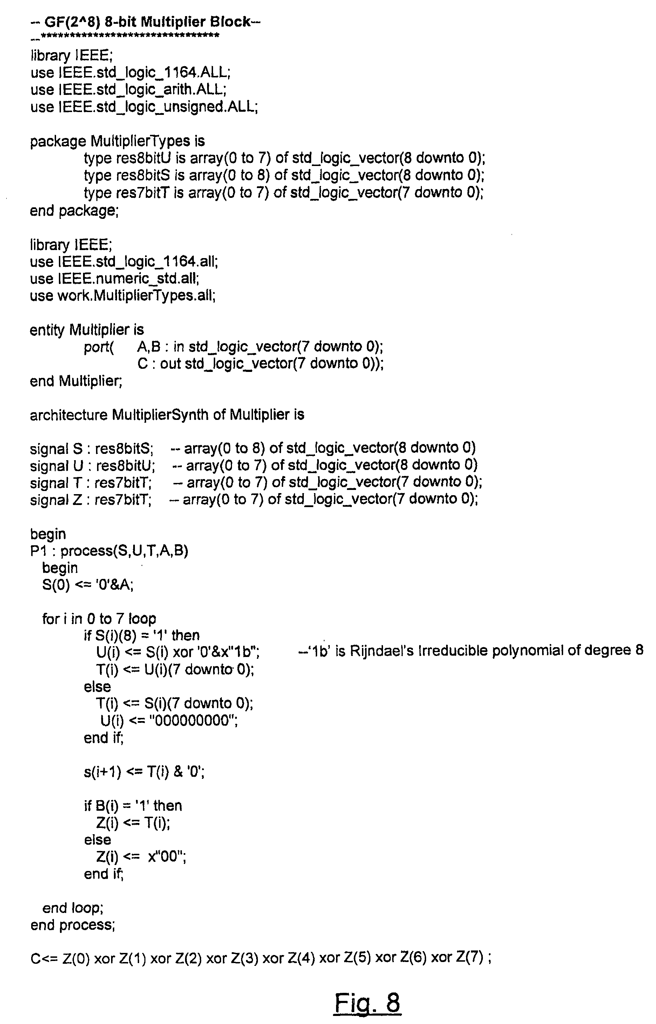

Figure 8 provides suitable VHDL (Very high speed integrated circuit Hardware Description Language) code for generating the multiplier blocks 78, in which the inputs A and B given in the code correspond respectively with the first and second inputs of the multiplier blocks, and C is the product of A and B.

The MixCol module 56 produces an output in State 10 form that is provided as an input to the key addition module 58. The key addition module 58 is provided with the respective round key as a second input. The round key is equal in length to the data block length $N_b$ and thus comprises 16 bytes $K_i$, where i = 0 to 15. The key addition module 58 comprises an XOR component 90 arranged to perform a bitwise XOR operation of each byte $B_i$ of the input State 10 with a respective byte $K_i$ of the round key.

The result is the Round Output, in State 10 form, which is provided to the next stage in the pipeline as appropriate.

The round module 46 for the final round is the same as the round module 44 except that the MixCol module 56 is omitted.

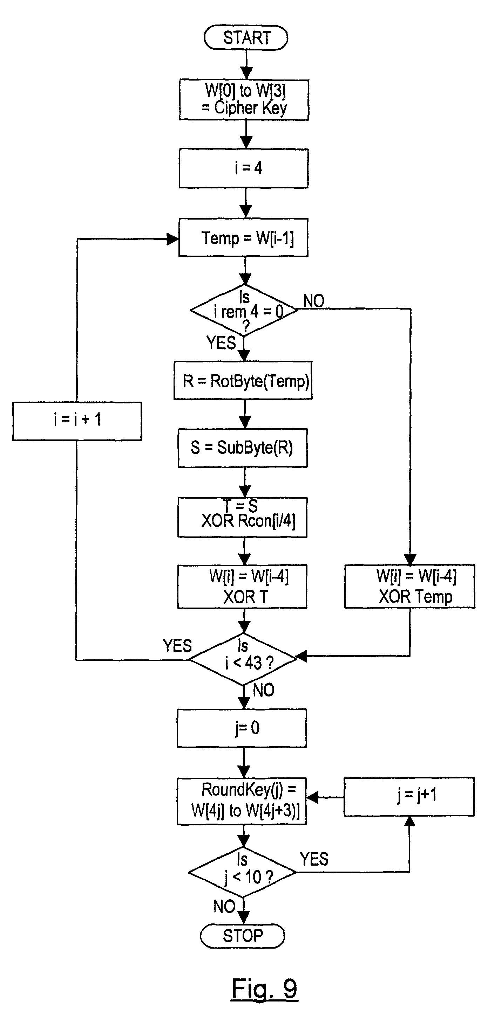

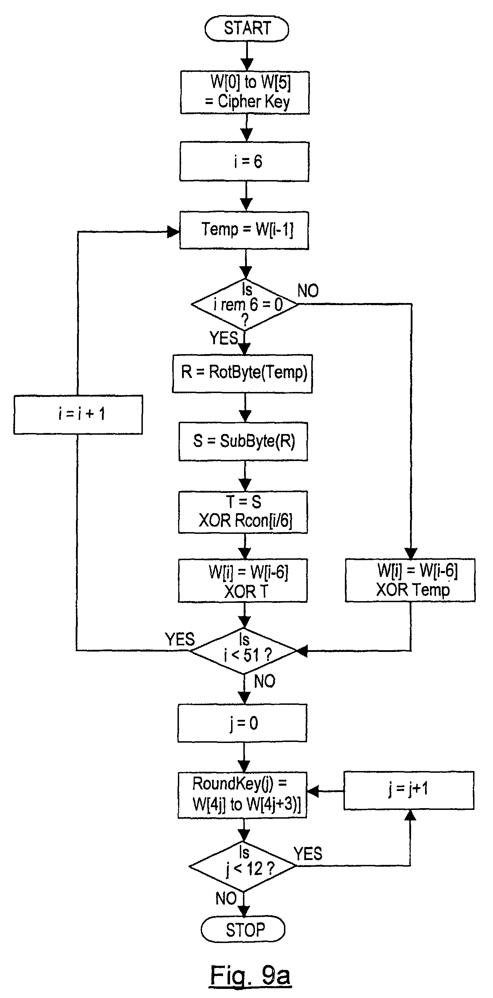

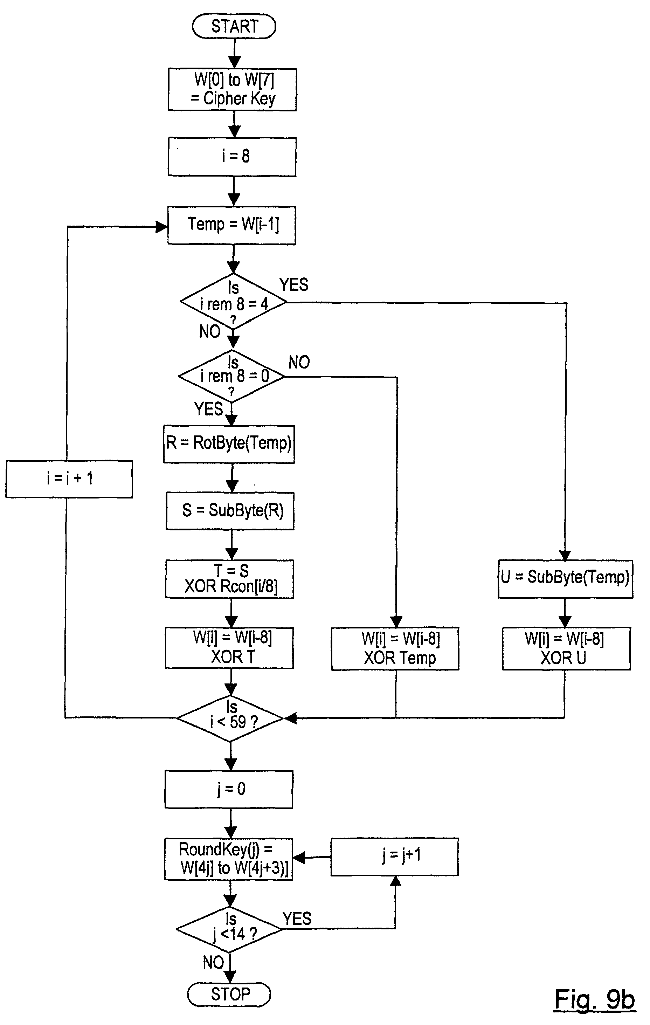

The apparatus 40 also includes a key schedule module 50 arranged to implement the key schedule 28. In Figure 9, there is shown a flow chart illustrating the key expansion part (operations 905 to 945) and the round key selection part (operations 955 to 970) included in the key schedule 28. The flow chart of Figure 9 relates to the case where the key block length $N_k$ = 4, the data block length $N_b$ = 4 and the number of rounds $N_r$ = 10. Alternative flow charts are given in Figures 9a and 9b for the case where the key lengths are 192 bits and 256 bits respectively.

Referring now to Figure 9 (numerals in parentheses() referring to the drawing labels), the input to the key schedule module 50 is the cipher key which is assigned to the first four words W[0] to W[3] of the expanded key (905). A counter *i* (which represents the position of a word within the expanded key) is set to four (910). The word W[*i*-1] (which initially is W[3]) is assigned to a 4-byte word *Temp* (915). A remainder function *rem* is performed on the counter *i* to determine if its current value is a multiple of $N_k$, which in the present example is equal to 4 (920). If the result of the *rem* function is not zero i.e. if the counter value is not exactly divisible by 4, then the word W[*i*-4] is XORed with the word currently assigned to *Temp* to produce the next word W[i] (950). For example, when *i* = 5, W[5] is produced by XORing W[1] with W[4].

The value of counter *i* is then tested to check if all the words of the expanded key have been produced - 44 words are required in the present example (945). If *i* is less than 44 i.e. the expanded key is not complete, then counter i is incremented (946) and control returns to step 915.

If the result of the *rem* function is zero (920), this indicates that the word currently assigned to *Temp* is in a position that is a multiple of $N_k$ and so requires to undergo a transformation. A function *RotByte* is performed on the word assigned to *Temp,* the result being assigned to a 4-byte word *R* (925). The *RotByte* function involves a cyclical shift to the left of the bytes in a 4-byte word. For example, an input of $(B_0, B_1, B_2, B_3)$ will produce the output $(B_1, B_2, B_3, B_0)$.

A function *SubByte* is then performed on *R* (930), the result being assigned to a 4-byte word S. *SubByte* operates on a 4-byte word and involves subjecting each byte to the ByteSub transformation 30 described above.

The resulting word *S* is XORed with the result of a function *Rcon[x]*, where *x* = *i*/4, the result being assigned to a 4-byte word *T* (935). *Rcon[x]* returns a 4-byte vector, *Rcon[x]* = (*RC(x)*, '00', '00', '00'), where the values of *RC[x]* are as follows:

| RC[1] = '01' | RC[2] = '02' | RC[3] = '04' | RC[4] = '08' | RC[5] = '10' |
|---|---|---|---|---|
| RC[6] = '20' | RC[7] = '40' | RC[8] = '80' | RC[9] = '1B' | RC[10] = '36' |

The word W[*i*-4] is then XORed with the word currently assigned to T to produce the next word W[*i*] (940).

The value of counter *i* is then tested to check if all the words of the expanded key have been produced (945). If *i* is not less than 43 then the expanded key is complete.

To perform round key selection, a second counter j (which represents a round key index) is set to zero (960). Four 4-byte words W[4j] to W[4j+3] are assigned to Round Key[j] (965) for j = 0 to 10 (965, 970). Thus, for a ten round encryption/decryption, eleven round keys are provided, round key 0 to round key 10 where round key 0 comprises words W[0] to W[3] of the expanded key (i.e. the original cipher key), round key 1 comprises words W[4] to W[7] of the expanded key, and so on (See Fig. 1c). Round key 0 is used by the data/key addition module 48, round key 1 is provided to the round module 44 for round 1, round key 2 is provided to the round module 44 for round 2 and so on until round key 10 is used in the round module 46 for the final round (see Figs 4 and 5).

The round keys are created as required, hence, round key 0 is available immediately, round key 1 is created one clock cycle later and so on.

The flow chart of Figure 9 may readily be coded using a conventional hardware description language (HDL), such as VHDL, and the code used to generate corresponding circuitry using a conventional hardware synthesis tools.

In the key schedule module 50, LUTs can also be used to implement logic functions. In particular, some words are subjected to the ByteSub module 30 during key expansion (see operation 930 in Figure 9) and this is preferably implemented using one or more LUTs (not shown). The content of the LUTs during encryption is the same as given in Figure 7. For example, in an apparatus 40 utilizing a 128-bit key, forty words are created during expansion of the key and every fourth word is passed through the Rijndael s-box (i.e. subjected to the ByteSub transformation 30) with each byte in the word being transformed, making a total of forty bytes requiring transformation. In the preferred embodiment, therefore, forty 8-bit to 8-bit LUTs (not shown) are included in the key schedule module 50. When using Xilinx Virtex BRAMs to implement these, 20 BRAMs are required. Thus, to implement the round modules 44, 46 and the key schedule 50, a total of 100 BRAMs are required, 80 BRAMs are required for the 10 rounds and a further 20 for the key schedule module 50. Similarly, 112 BRAMs are required for a 192-bit version of the apparatus (96 for the 12 rounds and 16 for the key schedule) and 138 for a 256-bit version (112 for the 14 rounds and 26 for the key schedule).

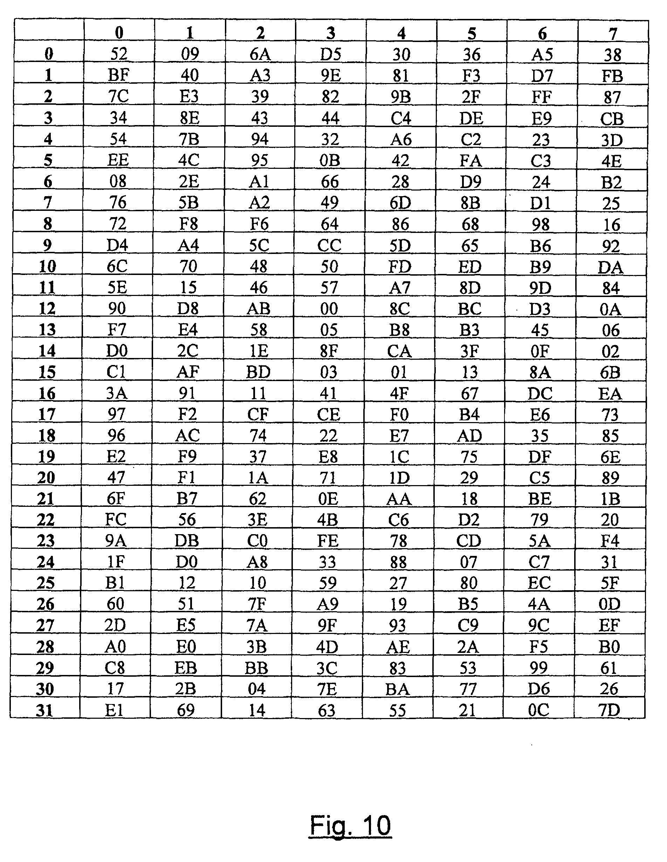

In the decryption operation, the inverse of the ByteSub transformation 30 is also advantageously implemented as a LUT or ROM. However, the LUT values for decryption are different to those required for encryption. Figure 10 shows the Hexadecimal values contained in a LUT during decryption for implementing the inverse of the ByteSub transformation 30. The layout of the table shown in Figure 10 is the same as described for Figure 7. For example, an input of '00' (hexadecimal) would return the output, '52', while an input of 'FF' returns the output '7D'.

There are a number of ways to arrange for the apparatus 40 to perform both encryption and decryption. One method involves doubling the number of BRAMs, or other LUTs/ROMs, utilised (one set of BRAMs/LUTs being used for encryption and another set being used for decryption). However, this approach is costly on area.

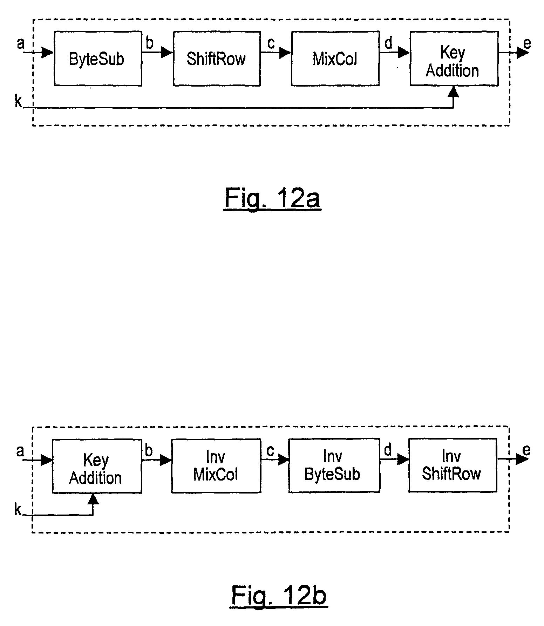

The preferred approach is illustrated in Figure 11.

Figure 11 shows two representative ByteSub modules 52 (the ones for round 0 and for the final Round respectively) as described with reference to Figure 5. Each ByteSub module 52 comprises a plurality of LUTs, or ROMs, which in the present example are provided by eight BRAMs 60, each BRAM providing two 8-bit to 8-bit LUTs in the form of its respective two single port RAMs. Two further storage devices, in the form of ROMs 92, 94, are provided to store the respective LUT values required for encryption and decryption (as shown in Figures 7 and 10 respectively). Conveniently, ROMs 92, 94 can be implemented using one or more BRAMs (assuming implementation in a Virtex FPGA), configured to serve as ROMs, one containing the initialisation values for the LUTs required during encryption, the other containing the values for the LUTs required during decryption. The ROMs 92, 94 are selectable via a 2-to-1 selector switch, or 2-to-1 multiplexer 96, that is operable by the control signal *Enc/Dec*. Referring back to Figure 4, the ROMs 92, 94 and the multiplexer 96 are included in a RAM initialiser module 47, the output from the RAM initialiser module 47 (which output corresponds with the output of the multiplexer 96) being provided to each of the round modules 44, 46 in order to initialise the BRAMs in the respective ByteSub modules 52 (as shown in Figure 10) with the appropriate LUT values. Thus, when the apparatus 40 is required to perform data encryption (and the control signal *Enc/Dec* is set accordingly), all the BRAMs 60 in the ByteSub modules 52 are initialised with data read from the ROM 92 containing the values required for encryption. When the apparatus 40 required to perform data decryption (and the control signal *Enc/Dec* is set accordingly), all the BRAMs 60 in the ByteSub modules 52 are initialised with data read from the ROM 94 containing the values required for decryption.

The initialisation of the BRAMs 60 for either decryption or encryption takes 256 clock cycles as the 256 LUT values are read from ROM 92 or ROM 94 respectively. For a typical system clock of 25.3 MHz, this corresponds to an initialisation time delay of only 10us. When encrypting data, the keys are produced as each round requires them.

Therefore, data encryption takes 10 clock cycles, corresponding to the 10 rounds when using a 128-bit key. Data decryption takes 20 clock cycles, 10 clock cycles for the required round keys to be constructed and a further 10 cycles corresponding to the 10 rounds.

It will be appreciated that the initialisation ROMs 92, 94 may be implemented using a single BRAM since a BRAM can be configured to serve as two 256 x 8-bit RAMs, each of which may be configured to operate as a ROM. In the preferred embodiment, however, each ROM 92, 94 is implemented using a respective BRAM, with each BRAM being arranged to store the respective encryption or decryption LUT values in both RAMs provided by that BRAM. Using the BRAM resources in this way simplifies the wiring required in the FPGA since two ROMs (i.e. the appropriately configured RAMs) with the appropriate LUT values are now provided to initialise the BRAMs in the round modules 44, 46 for encryption, and a further two ROMs with the appropriate LUT values for decryption are also available. When two BRAMs are used in this way, the multiplexer 96 is supplemented by a second 2-to-1 multiplexer (not shown), each of the two multiplexers having one input connected to a respective ROM holding encryption values, the other input being connected to a respective ROM holding decryption values. Both multiplexers are operable by the control signal *Enc*/*Dec* to produce a respective output. With this arrangement, two output lines are available from the RAM initialiser 47 (only one shown in Fig. 4) for initialising the BRAMs in the round modules 44, 46 and this simplifies the wiring in the FPGA. It will be appreciated that, equally, further BRAMs, or ROMs, may be used in a similar manner to further simplify the wiring if desired.

During decryption, the values of the LUTs utilised in the key schedule module 50 are the same as those required for encryption. Hence, the LUTs in the key schedule module 50 can conveniently be implemented as ROMs (where BRAMs are used, they can be configured to act as ROMs as described above). However, the round keys for decryption are used in reverse order to that used in encryption. Therefore, for the 128-bit key encryptor/decryptor apparatus 40, if data decryption is carried out initially, it is necessary to wait 20 clock cycles before the respective decrypted data appears (10 clock cycles for the construction of the 10 round keys and 10 clock cycles corresponding to the number of rounds in the apparatus 40). If encrypting data or previously encrypted data is being decrypted, this initial delay is only 10 clock cycles as the round keys do not necessarily need to be reconstructed. Overall, therefore, the apparatus 40 uses 102 BRAMs although the apparatus only requires 202 LUTs in total: 160 for the rounds, 40 for the key schedule and 2 for the initialisation ROMs.

Although the apparatus 40 is arranged to perform both encryption and decryption, a skilled person will appreciate that the apparatus 40 may be modified to perform encryption only or decryption only, if desired. For an encryption only or decryption only apparatus, the RAM initialiser 47 is not necessary, nor is the control signal *Enc*/*Dec* and associated switches. Each LUT in the round modules may be implemented as a ROM and initialised with the appropriate LUT values from Figure 7 or 10.

The apparatus 40, or the encryption only/decryption only version, is preferably implemented using Xilinx Foundation Series 2.1i software and Synplify Pro V6.0 on Xilinx Virtex-E FPGA devices. Input data blocks can be accepted every clock cycle and after an initial delay (see above) the respective encrypted/decrypted data blocks appear on consecutive clock cycles. On the Virtex-E XCV3200e-8-cg1156 device, the apparatus 40 utilizes 7576 CLB slices (23%) and 102 BRAMs (49%). Of IOBs 385 of 804 are used. The design uses a system clock of 25.3 MHz and runs at a data-rate of 3239 Mbits/sec (405 Mbytes/sec). There are no known similar single-chip FPGA encryptor/decryptor implementations. Also, the results obtained compare very well with existing ASIC implementations, as illustrated in Table 2 below.

Table 2.

| Specifications of Rijndael ASIC Implementations | | |
|---|---|---|
| | **Device** | **Throughput (Mbits/sec)** |
| Ichikawa, Kasuya,Matsui [2] | CMOS | 1950 |
| Weeks, Bean, Rozylowicz, Ficke [5] | CMOS | 5163 |
| Invention | XCV3200E | 3239 |

The performance results obtained for an encryption only apparatus are similar to those of an apparatus with only decryption capabilities. The main difference in the two implementations is the initial delay time as mentioned above. For example, a 128-bit key encryption only design implemented on the Virtex-E XCV812e-8bg560 device, utilizes 2222 CLB slices (23%) and 100 BRAMs (35%). Of IOBs 384 of 404 are used. The design uses a system clock of 54.35 MHz and runs at a data-rate of 7 Gbits/sec (870 Mbytes/sec). These results prove faster than similar existing FPGA implementations, as illustrated in Table 3 below.

Table 3.

| Specifications of 128-bit Key Rijndael Encryption FPGA Implementations | | | | |
|---|---|---|---|---|
| | **Type** | **Device** | **Area (CLB Slices)** | **Throughput (Mbits/sec)** |
| Gaj, Chodowiec [3] | IL | XCV1000 | 2902 | 331.5 |
| Elbirt, Yap, Chetwynd, Paar [4] | SP | XCV1000 | 9004 | 1940 |
| Dandalis, Prasanna, Rolim [1] | IL | Virtex | 5673 | 353 |
| Invention | P | XCV812E | 2222 | 6031 |

The apparatus 40 may alternatively be implemented on the new Xilinx Virtex II family of FPGA devices.
Rijndael is set to be approved by NIST and replace DES as the Federal Information Processing Encryption Standard (FIPS) in the summer of 2001. It will replace DES in applications such as IPSec protocols, the Secure Socket Layer (SSL) protocol and in ATM cell encryption. In general, hardware implementations of encryption algorithms and their associated key schedules are physically secure, as they cannot easily be modified by an outside attacker. Also, the high speed Rijndael encryptor core and Rijndael encryptor/decryptor core presented herein, should prove beneficial in applications where speed is vital as with real-time communications such as satellite communications and electronic financial transactions.

In the foregoing description, the preferred implementation is on FPGA. It will be understood that the apparatus of the invention may alternatively be implemented on other conventional devices such as other Programmable Logic Devices (PLDs) or an ASIC (Application Specific Integrated Circuit). In an ASIC implementation, the LUTs may be implemented in conventional manner using, for example, standard RAM or ROM components.

In the preferred embodiment described above, the ByteSub module 52 is implemented using LUTs while the ShiftRow and MixCol modules 54, 56 are implemented in logic. In an alternative embodiment of the invention, the ShiftRow and MixCol transformations are also implemented as LUTs rather than using logic. This embodiment is based on the following equation (modified from the equation provided in the Rijndael specification):

$$e_j = T_0 \, [a_{0,j}] \oplus T_1 \, [a_{1,j+1}] \oplus T_2 \, [a_{2,j+2}] \oplus T_3 \, [a_{3,j+3}] \oplus k_j \qquad\qquad [5]$$

where,

$$T_0 = \begin{bmatrix} S[a] \bullet 02 \\ S[a] \\ S[a] \\ S[a] \bullet 03 \end{bmatrix} \quad T_1 = \begin{bmatrix} S[a] \bullet 03 \\ S[a] \bullet 02 \\ S[a] \\ S[a] \end{bmatrix} \quad T_2 = \begin{bmatrix} S[a] \\ S[a] \bullet 03 \\ S[a] \bullet 02 \\ S[a] \end{bmatrix} \quad T_3 = \begin{bmatrix} S[a] \\ S[a] \\ S[a] \bullet 03 \\ S[a] \bullet 02 \end{bmatrix}$$

and the State is denoted,

| | $j = 0$ | $j = 1$ | $j = 2$ | $j = 3$ |
|---|---|---|---|---|
| $i = 0$ | $B_{0,0}$ | $B_{0,1}$ | $B_{0,2}$ | $B_{0,3}$ |
| $i = 1$ | $B_{1,0}$ | $B_{1,1}$ | $B_{1,2}$ | $B_{1,3}$ |
| $i = 2$ | $B_{2,0}$ | $B_{2,1}$ | $B_{2,2}$ | $B_{2,3}$ |
| $i = 3$ | $B_{3,0}$ | $B_{3,1}$ | $B_{3,2}$ | $B_{3,3}$ |

and the significance of a, b, c, d, e and k can be seen from Figure 12a.

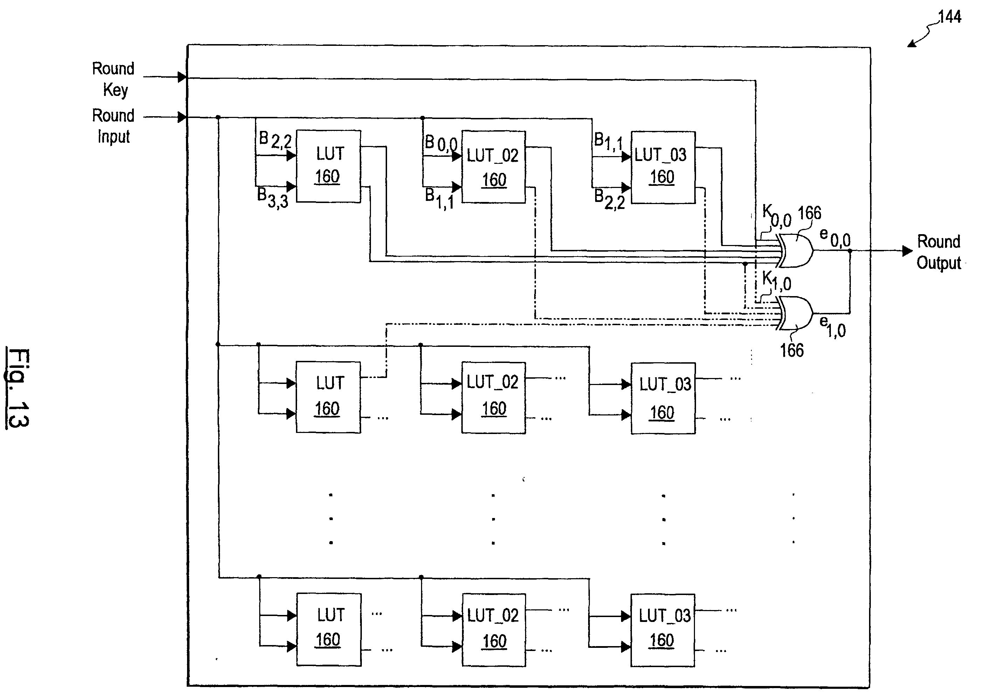

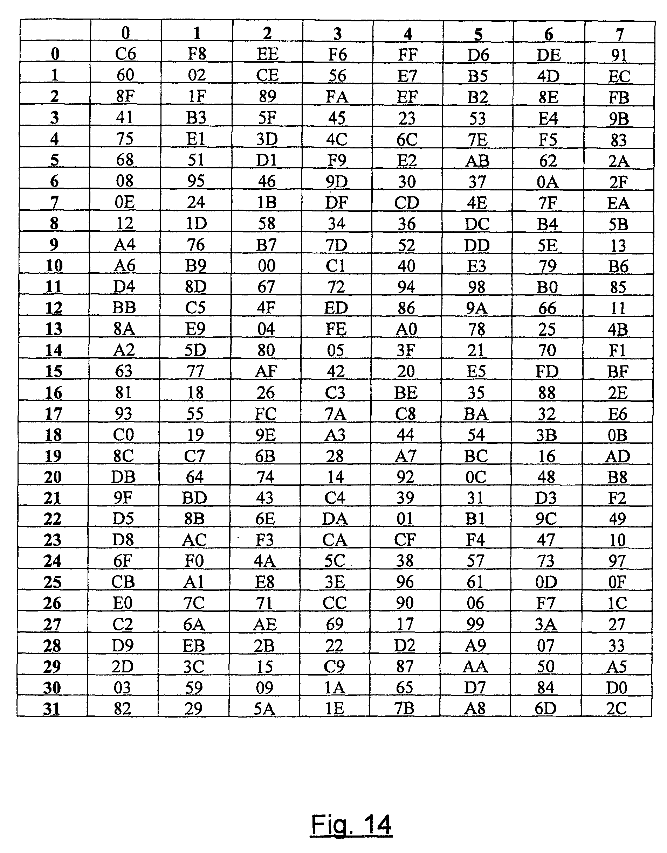

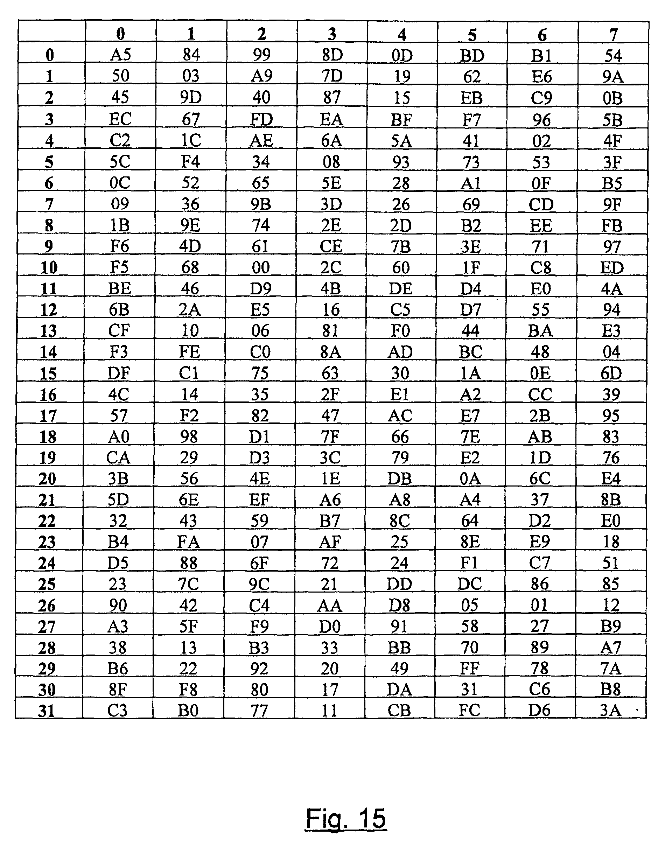

Figure 13 illustrates schematically a Rijndael round module 144 comprising the components required for encryption. During Encryption three different sets of LUTs are required. Each LUT (labelled 'LUT' in Figure 13) in the first set of LUTs comprises values as shown in Figure 7. Each LUT (labelled 'LUT_02' in Figure 13) in the second set comprises values as shown in Figure 14. Each LUT (labelled 'LUT_03' in Figure 13) in the third set comprises values as shown in Figure 15. The LUTs may conveniently be implemented as BRAMs in the manner described above with two LUTs implemented by each BRAM. Thus, in Figure 13, each set of LUTs comprises eight BRAMs 160. The outputs of the BRAMs 160 are combined in accordance with equation [5] using XOR gates 166. The round key addition is also performed by XOR gates 166 (see also Fig. 12a).

In the round module 144, 24 Block RAMs are required to implement each Rijndael round to perform an encryption.

The design for decryption is not as straightforward as the encryption design. The decryption design is based on the following equation (this equation is not provided in the Rijndael specification):

$$\begin{bmatrix} e_{0,j} \\ e_{1,j} \\ e_{2,j} \\ e_{3,j} \end{bmatrix} = \begin{bmatrix} InvS[0E \bullet b_{0,j} \oplus 0B \bullet b_{1,j} \oplus 0D \bullet b_{2,j} \oplus 09 \bullet b_{3,j} \\ InvS[09 \bullet b_{0,j+3} \oplus 0E \bullet b_{1,j+3} \oplus 0B \bullet b_{2,j+3} \oplus 0D \bullet b_{3,j+3}] \\ InvS[0D \bullet b_{0,j+2} \oplus 09 \bullet b_{1,j+2} \oplus 0E \bullet b_{2,j+2} \oplus 0B \bullet b_{3,j+2} \\ InvS[0B \bullet b_{0,j+1} \oplus 0D \bullet b_{1,j+1} \oplus 09 \bullet b_{2,j+1} \oplus 0E \bullet b_{3,j+1} \end{bmatrix} \qquad [6]$$

where the significance of a, b, c, d, e and k can be seen from Figure 12b.

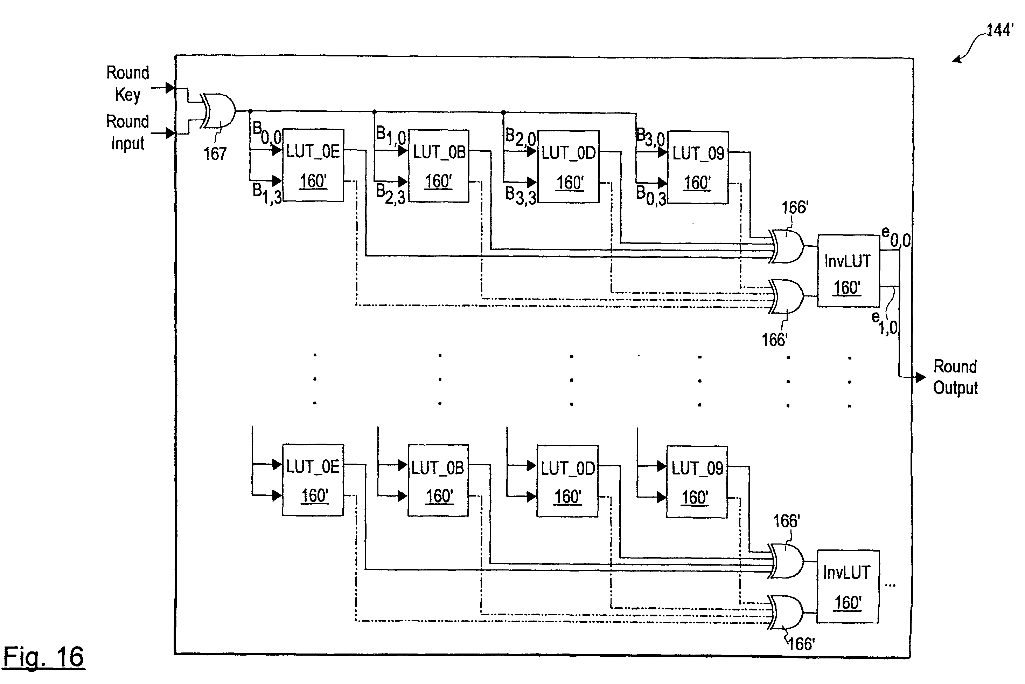

Figure 16 shows a schematic diagram of a round module 144' for performing decryption. Round key addition is performed firstly (see also Fig. 12b) using XOR gate 167. Five LUT sets are required (each set comprising eight LUTs in this example, although only two of each set are shown in Figure 16). Each LUT in the first set of LUTs (labelled as 'InvLUT' in Fig. 16) contains values as shown in Figure 10. The LUTs required for the four other LUT sets each comprise values given respectively by ($0E \bullet b_{i,j}$), ($0B \bullet b_{i,j}$), ($0D \bullet b_{i,j}$) and ($09 \bullet b_{i,j}$). For example, the LUTs labelled 'LUT_0E' have values corresponding to ($0E \bullet b_{i,j}$) and are constructed by multiplying every possible byte from '00' to '11' by '0E' The LUTs labelled 'LUT_0B', 'LUT_0D' and 'LUT_09' are constructed in a corresponding manner. Thus, 'LUT_0E' contains the values ($0E \bullet b_{i,j}$), 'LUT_0D' contains the values ($0D \bullet b_{i,j}$), 'LUT_0B' contains the values ($0B \bullet b_{i,j}$) and 'LUT_09' contains the values ($09 \bullet b_{i,j}$). The outputs of the LUTs are combined in accordance with equation [6] above using XOR gates 166'. Forty BRAMs per round module 144' are required.

The round modules 144 and 144' may readily be combined to form a single round module (not shown) for implemented either encryption or decryption depending on the setting of the *enc/dec* signal. The combined round module is implemented using 40 BRAMs. During encryption only 24 of these are in operation, while during decryption they are all in operation. For the final round, only 8 Block RAMs are required since the final round does not include the MixCol transformation. Furthermore, the LUTs in the combined round module may be initialised using the general selectable ROM structure shown in Figure 11 (although the round module now comprises 40 BRAMs as opposed to the eight shown in Fig. 11). Eight additional ROMs are required to initialise the combined encryption/decryption round module, 3 for encryption (i.e. containing values for LUT, LUT_02 and LUT_03) and 5 for decryption (i.e. containing values for InvLUT, LUT_0E, LUT_0B, LUT_0D and LUT_09). The key schedule requires 20 RAMs. Hence, the entire apparatus utilises 396 BRAMs. It may be said therefore that there is a first set of LUT values for encryption and a second set of LUT values for decryption. The first set containing three sub-sets of LUT values, a respective sub-set for each of LUTs LUT, LUT_02 and LUT_03, and the second set containing five sub-sets of LUT values, a respective sub_set for each of LUTs InvLUT, LUT_0E, LUT_0B, LUT_0D and LUT_09.

It will be seen from the foregoing that the preferred embodiment requires fewer BRAMs than the alternative embodiment. This is particularly advantageous when implementing the apparatus in FPGA or other target device where the available resources are limited or where it is important to keep size to a minimum.

The invention is not limited to the embodiments described herein which may be modified or varied without departing from the scope of the invention.

References

1. Dandalis, V.K. Prasanna, J.D.P. Rolim ; A Comparative Study of Performance of AES Candidates Using FPGAs ; The Third Advanced Encryption Standard (AES3) Candidate Conference, 13-14 April 2000, New York, USA.

2. T. Ichikawa, T. Kasuya, M. Matsui ; Hardware Evaluation of the AES Finalists ; The Third Advanced Encryption Standard (AES3) Candidate Conference, 13-14 April 2000, New York, USA.

3. K. Gaj, P. Chodowiec ; Comparison of the Hardware Performance of the AES Candidates using Reconfigurable Hardware ; The Third Advanced Encryption Standard (AES3) Candidate Conference, 13-14 April 2000, New York, USA.

4. A.J. Elbirt, W. Yip, B. Chetwynd, C. Paar ; An FPGA Implementation and Performance Evaluation of the AES Block Cipher Candidate Algorithm Finalists ; The Third Advanced Encryption Standard (AES3) Candidate Conference, 13-14 April 2000, New York, USA.

5. B. Weeks, M. Bean, T. Rozylowicz, C. Ficke ; Hardware Performance Simulations of Round 2 Advanced Encryption Standard Algorithms ; The Third Advanced Encryption Standard (AES3) Candidate Conference, 13-14 April 2000, New York, USA.

**Claims**

1. An apparatus (40) for selectably encrypting or decrypting data in accordance with a private or symmetric key encryption/decryption algorithm in which at least some data transformations differ between encryption and decryption, the apparatus being arranged to receive a control signal for selecting between encryption and decryption, the apparatus (40) comprising at least one data processing module (44, 144, 144') arranged to perform one or more data encryption or data decryption operations depending on the setting of said control signal, wherein at least part of said at least one data processing module (44, 144, 144') comprises one or more programmable Look-up Tables (LUTs) (60, 160, 160'), **characterised in that** the apparatus (40) further comprises at least one storage device (92, 94) for storing a first set and a second set of LUT values, the apparatus (40) being arranged to program some or all of said LUTs with said first set of LUT values when said control signal is set to encrypt, and to program some or all of said LUTs with said second set of LUT values when said control signal is set to decrypt.

2. An apparatus as claimed in Claim 1, wherein the apparatus comprises a plurality of LUTs each of which is programmed with said first set of LUT values during encryption and programmed with said second set of LUT values during decryption.

3. An apparatus as claimed in Claim 1, wherein the apparatus comprises a plurality of LUTs and the first and second sets of LUT values each comprise a plurality of respective sub-sets of LUT values, and wherein, during encryption, some of LUTs are programmed with a respective one of the sub-sets of LUT values belonging to said first set and, during decryption, all of the LUTs are programmed with a respective one of the sub-sets of LUT values belonging to said second set.

4. An apparatus as claimed in any preceding claim, wherein the apparatus comprises a plurality of data processing modules arranged in a data processing pipeline.

5. An apparatus as claimed in any preceding claim, wherein the apparatus is arranged to perform encryption or decryption in accordance with the Rijndael Block Cipher, and wherein the data processing module is arranged to implement a Rijndael round.

6. An apparatus as claimed in Claim 5, wherein the data processing module is arranged to implement the ByteSub transformation of the Rijndael round in at least one LUT.

7. An apparatus as claimed in Claim 5 or Claim 6, wherein said first set of LUT values is arranged to program a LUT to implement the Rijndael ByteSub transformation and said second set of LUT values is arranged to program a LUT to implement the inverse of the Rijndael ByteSub transformation.

8. An apparatus as claimed in any preceding claim, wherein the data processing module includes a respective LUT for each byte of an input data block.

9. An apparatus as claimed in Claim 5, wherein the entire Rijndael round is implemented using one or more LUTs.

10. An apparatus as claimed in any preceding claim, wherein the first and second set of LUT values are stored in respective first and second storage devices and the apparatus further includes a 2-to-1 selector switch operable by said control signal to select said first storage device when the control signal is set to encode, and to select said second storage device when the control signal is set to decode.

11. An apparatus as claimed in Claim 10, wherein the apparatus includes two or more sets of a first and a second storage device, each first and second storage device storing said first and second set of LUT values respectively, the apparatus further including a respective 2-to-1 selector switch for each set of first and second storage device.

12. An apparatus as claimed in Claim 10 or 11, wherein said first and second storage devices are implemented by means of respective Read Only Memories (ROMs).

**13.** An apparatus as claimed in Claim 10 or 11, wherein said first and second sets of LUT values are stored in respective storage locations of a single storage device and are selectable by a 2-to-1 selector switch.

**14.** An apparatus as claimed in any preceding claim, wherein each LUT is implemented by means of a programmable Random Access Memory (RAM) or a programmable Read Only Memory (ROM).

**15.** A computer program product comprising computer useable instructions arranged to define an apparatus according to Claim 1.

**Patentansprüche**

**1.** Vorrichtung (40) zum wählbaren Verschlüsseln oder Entschlüsseln von Daten gemäß einem Verschlüsselungs-/ Entschlüsselungsalgorithmus mit Private- oder Symmetric-Key, bei dem sich wenigstens einige Datentransformationen zwischen Verschlüsselung und Entschlüsselung unterscheiden, wobei die Vorrichtung die Aufgabe hat, ein Steuersignal zum Wählen zwischen Verschlüsselung und Entschlüsselung zu empfangen, wobei die Vorrichtung (40) wenigstens ein Datenverarbeitungsmodul (44, 144, 144') umfasst, das so gestaltet ist, dass es, je nach der Einstellung des genannten Steuersignals, ein oder mehrere Datenver- oder -entschlüsselungsoperationen durchführt, wobei wenigstens ein Teil des genannten wenigstens einen Datenverarbeitungsmoduls (44, 144, 144') eine oder mehrere programmierbare Lookup-Tabellen (LUTs) (60, 160, 160') umfasst, **dadurch gekennzeichnet, dass** die Vorrichtung (40) ferner wenigstens ein Speichergerät (92, 94) zum Speichern eines ersten Satzes und eines zweiten Satzes von LUT-Werten umfasst, wobei die Vorrichtung (40) die Aufgabe hat, einige oder alle der genannten LUTs mit dem genannten ersten Satz von LUT-Werten zu programmieren, wenn das genannte Steuersignal zum Verschlüsseln eingestellt ist, und einige oder alle der genannten LUTs mit dem genannten zweiten Satz von LUT-Werten zu programmieren, wenn das genannte Steuersignal zum Entschlüsseln eingestellt ist.

**2.** Vorrichtung nach Anspruch 1, wobei die Vorrichtung eine Mehrzahl von LUTs umfasst, die jeweils mit dem genannten ersten Satz von LUT-Werten beim Verschlüsseln und mit dem genannten zweiten Satz von LUT-Werten beim Entschlüsseln programmiert sind.

**3.** Vorrichtung nach Anspruch 1, wobei die Vorrichtung eine Mehrzahl von LUTs umfasst und der erste und der zweite Satz von LUTs jeweils eine Mehrzahl von jeweiligen Teilmengen von LUT-Werten umfassen, und wobei beim Verschlüsseln einige der LUTs mit einer jeweiligen einen der Teilmengen von LUT-Werten programiert sind, die zu dem genannten ersten Satz gehören, und beim Entschlüsseln alle LUTs mit einer jeweiligen einen der Teilmengen von LUT-Werten programmiert sind, die zu dem genannten zweiten Satz gehören.

**4.** Vorrichtung nach einem der vorherigen Ansprüche, wobei die Vorrichtung eine Mehrzahl von Datenverarbeitungsmodulen umfasst, die in einer Datenverarbeitungspipeline angeordnet sind.

**5.** Vorrichtung nach einem der vorherigen Ansprüche, wobei die Vorrichtung die Aufgabe hat, Ver- oder Entschlüsselung gemäß dem Rijndael Block Cipher durchzuführen, und wobei das Datenverarbeitungsmodul die Aufgabe hat, eine Rijndael-Runde zu implementieren.

**6.** Vorrichtung nach Anspruch 5, wobei das Datenverarbeitungsmodul die Aufgabe hat, die ByteSub-Transformation der Rijndael-Runde in wenigstens einer LUT zu implementieren.

**7.** Vorrichtung nach Anspruch 5 oder Anspruch 6, wobei der genannte erste Satz von LUT-Werten eine LUT so programmieren soll, dass die Rijndael-ByteSub-Transformation implementiert wird, und wobei der genannte zweite Satz von LUT-Werten eine LUT so programmieren soll, dass die Umkehr der Rijndael-ByteSub-Transformation implementiert wird.

**8.** Vorrichtung nach einem der vorherigen Ansprüche, wobei das Datenverarbeitungsmodul für jedes Byte eines Eingangsdatenblocks eine jeweilige LUT aufweist.

**9.** Vorrichtung nach Anspruch 5, wobei die gesamte Rijndael-Runde mit einer oder mehreren LUT(s) implementiert wird.

**10.** Vorrichtung nach einem der vorherigen Ansprüche, wobei der erste und der zweite Satz von LUT-Werten in einem jeweiligen ersten und zweiten Speichergerät gespeichert werden und die Vorrichtung ferner einen 2-zu-1-Wahlschalter aufweist, der von dem genannten Steuersignal betätigt wird, um das genannte erste Speichergerät zu wählen, wenn das Steuersignal auf Codieren eingestellt ist, und um das genannte zweite Speichergerät zu wählen, wenn das Steuersignal auf Decodieren eingestellt ist.

11. Vorrichtung nach Anspruch 10, wobei die Vorrichtung zwei oder mehr Sätze eines ersten und eines zweiten Speichergerätes aufweist, wobei jedes erste und zweite Speichergerät den genannten ersten bzw. zweiten Satz von LUT-Werten speichert, wobei die Vorrichtung ferner einen jeweiligen 2-zu-1-Wahlschalter für jeden Satz von ersten und zweiten Speichergeräten aufweist.

12. Vorrichtung nach Anspruch 10 oder 11, wobei das genannte erste und zweite Speichergerät mit jeweiligen Festwertspeichern (ROMs) implementiert werden.

13. Vorrichtung nach Anspruch 10 oder 11, wobei der genannte erste und zweite Satz von LUT-Werten in jeweiligen Speicherpositionen eines einzigen Speichergerätes gespeichert sind und mit einem 2-zu-1-Wahlschalter wählbar sind.

14. Vorrichtung nach einem der vorherigen Ansprüche, wobei jede LUT mit einem programmierbaren Arbeitsspeicher (RAM) oder einem programmierbaren Festwertspeicher (ROM) implementiert ist.

15. Computerprogrammprodukt, umfassend computernutzbare Anweisungen zum Definieren einer Vorrichtung nach Anspruch 1.

**Revendications**

1. Un appareil (40) pour crypter ou décrypter des données de manière sélective conformément à un algorithme de cryptage/décryptage à clé privée ou symétrique dans lequel au moins quelques transformations de données diffèrent entre le cryptage et le décryptage, l'appareil étant agencé de façon à recevoir un signal de commande pour effectuer la sélection entre cryptage et décryptage, l'appareil (40) comprenant au moins un module de traitement des données (44, 144, 144') agencé pour effectuer une ou plusieurs opérations de cryptage ou de décryptage de données selon le réglage dudit signal de commande, où au moins une partie dudit au moins un module de traitement des données (44, 144, 144') comprend une ou plusieurs tables de conversion (LUT) programmables (60, 160, 160'), **caractérisé par le fait que** l'appareil (40) comprend en outre au moins un dispositif de stockage (92, 94) pour le stockage d'un premier ensemble et d'un deuxième ensemble de valeurs LUT, l'appareil (40) étant agencé pour programmer un certain nombre ou toutes lesdites LUT avec ledit premier ensemble de valeurs LUT lorsque ledit signal de commande est défini de façon à crypter, et pour programmer un certain nombre ou toutes lesdites LUT avec ledit deuxième ensemble de valeurs LUT lorsque ledit signal de commande est défini de façon à décrypter.

2. Un appareil selon la Revendication 1, où l'appareil comprend une pluralité de LUT, chacune d'elles étant programmée avec ledit premier ensemble de valeurs LUT au cours du cryptage et programmée avec ledit deuxième ensemble de valeurs LUT au cours du décryptage.

3. Un appareil selon la Revendication 1, où l'appareil comprend une pluralité de LUT et le premier et le deuxième ensembles de valeurs LUT comprennent chacun une pluralité de sous-ensembles respectifs de valeurs LUT, et où, au cours du cryptage, certaines LUT sont programmées avec l'un des sous-ensembles respectifs de valeurs LUT appartenant audit premier ensemble et, au cours du décryptage, toutes les LUT sont programmées avec l'un des sous-ensembles respectifs de valeurs LUT appartenant audit deuxième ensemble.

4. Un appareil selon l'une quelconque des Revendications précédentes, où l'appareil comprend une pluralité de modules de traitement de données agencés en un pipeline de traitement de données.

5. Un appareil selon l'une quelconque des Revendications précédentes, où l'appareil est agencé de façon à effectuer le cryptage et le décryptage conformément au cryptage par blocs Rijndael et où le module de traitement des données est agencé de façon à mettre en oeuvre un tour Rijndael.

6. Un appareil selon la Revendication 5, où le module de traitement des données est agencé de façon à mettre en oeuvre la transformation ByteSub du tour Rijndael sur au moins une LUT.

7. Un appareil selon la Revendication 5 ou la Revendication 6, où ledit premier ensemble de valeurs LUT est agencé de façon à programmer une LUT pour mettre en oeuvre la transformation ByteSub Rijndael et ledit deuxième ensemble de valeurs LUT est agencé de façon à programmer une LUT pour mettre en oeuvre l'inverse de la transformation ByteSub Rijndael.

8. Un appareil selon l'une quelconque des Revendications précédentes, où le module de traitement des données inclut une LUT distincte pour chaque octet d'un bloc de données d'entrée.

9. Un appareil selon la Revendication 5, où la totalité du tour Rijndael est mis en oeuvre en utilisant une ou plusieurs LUT.

10. Un appareil selon l'une quelconque des Revendications précédentes, où le premier et le deuxième ensembles de valeurs LUT sont stockés sur un premier et un deuxième dispositifs de stockage distincts et où l'appareil inclut en outre un commutateur-sélecteur 2 à 1 opérable par ledit signal de commande pour sélectionner ledit premier dispositif de stockage lorsque le signal de commande est réglé de façon à encoder, et pour sélectionner ledit deuxième dispositif de stockage lorsque le signal de commande est réglé de façon à décoder.

11. Un appareil selon la Revendication 10, où l'appareil inclut deux ensembles ou plus d'un premier et d'un deuxième dispositifs de stockage, chaque premier et deuxième dispositifs de stockage stockant respectivement lesdits premier et deuxième ensembles de valeurs LUT, l'appareil incluant en outre un commutateur-sélecteur 2 à 1 pour chaque ensemble de premier et deuxième dispositifs de stockage.

12. Un appareil selon la Revendication 10 ou 11, où lesdits premier et deuxième dispositifs de stockage sont mis en oeuvre au moyen de mémoires mortes (ROM) distinctes.

13. Un appareil selon la Revendication 10 ou 11, où lesdits premier et deuxième ensembles de valeurs LUT sont stockés dans des emplacements de stockage distincts d'un même dispositif de stockage et sont sélectionnables par un commutateur-sélecteur 2 à 1.

14. Un appareil selon l'une quelconque des Revendications précédentes, où chaque LUT est mise en oeuvre au moyen d'une mémoire vive (RAM) programmable ou d'une mémoire morte (ROM) programmable.

15. Un programme informatique comprenant des instructions utilisables par un ordinateur agencées de façon à définir un appareil selon la Revendication 1.

| $P_{0,0}$ | $P_{0,1}$ | $P_{0,2}$ | $P_{0,3}$ |
|---|---|---|---|
| $P_{1,0}$ | $P_{1,1}$ | $P_{1,2}$ | $P_{1,3}$ |
| $P_{2,0}$ | $P_{2,1}$ | $P_{2,2}$ | $P_{2,3}$ |
| $P_{3,0}$ | $P_{3,1}$ | $P_{3,2}$ | $P_{3,3}$ |

## Fig. 1a

| $N_k = 4$ | | | | $N_k = 6$ | | $N_k = 8$ | |
|---|---|---|---|---|---|---|---|
| $K_{0,0}$ | $K_{0,1}$ | $K_{0,2}$ | $K_{0,3}$ | $K_{0,4}$ | $K_{0,5}$ | $K_{0,6}$ | $K_{0,7}$ |
| $K_{1,0}$ | $K_{1,1}$ | $K_{1,2}$ | $K_{1,3}$ | $K_{1,4}$ | $K_{1,5}$ | $K_{1,6}$ | $K_{1,7}$ |
| $K_{2,0}$ | $K_{2,1}$ | $K_{2,2}$ | $K_{2,3}$ | $K_{2,4}$ | $K_{2,5}$ | $K_{2,6}$ | $K_{2,7}$ |
| $K_{3,0}$ | $K_{3,1}$ | $K_{3,2}$ | $K_{3,3}$ | $K_{3,4}$ | $K_{3,5}$ | $K_{3,6}$ | $K_{3,7}$ |

## Fig. 1b

| $W_0$ | $W_1$ | $W_2$ | $W_3$ | $W_4$ | $W_5$ | $W_6$ | $W_7$ | $W_8$ | $W_9$ | .... |
|---|---|---|---|---|---|---|---|---|---|---|

| Round Key 0 | Round Key 1 | .... |
|---|---|---|

## Fig. 1c

|  | Col 0 | Col 1 | Col 2 | Col 3 |
|---|---|---|---|---|
| Row 0 | $B_0$ | $B_4$ | $B_8$ | $B_{12}$ |
| Row 1 | $B_1$ | $B_5$ | $B_9$ | $B_{13}$ |
| Row 2 | $B_2$ | $B_6$ | $B_{10}$ | $B_{14}$ |
| Row 3 | $B_3$ | $B_7$ | $B_{11}$ | $B_{15}$ |

## Fig. 6

Fig. 2

Fig. 3

Fig. 11

Fig. 4

EP 1 246 389 B1

ByteSub 52

Round Input

$B_0$ 60 $B_2$ 60 $B_4$ 60 $B_6$ 60
$B_1$ $B_3$ $B_5$ $B_7$

$B_8$ 60 $B_{10}$ 60 $B_{12}$ 60 $B_{14}$ 60
$B_9$ $B_{11}$ $B_{13}$ $B_{15}$

ShiftRow 54

Row 0
Row 1 66 76
62 68
Row 2
Row 3 70 74
64 72

Enc/Dec

MixCol 56

(See Fig. 5a)

Enc/Dec

Key Addition 58

$B_i$ 90
Round Output
Round Key $K_i$

44

Fig. 5

Fig. 5a

|    | 0  | 1  | 2  | 3  | 4  | 5  | 6  | 7  |
|----|----|----|----|----|----|----|----|----|
| 0  | 63 | 7C | 77 | 7B | F2 | 6B | 6F | C5 |
| 1  | 30 | 01 | 67 | 2B | FE | D7 | AB | 76 |
| 2  | CA | 82 | C9 | 7D | FA | 59 | 47 | F0 |
| 3  | AD | D4 | A2 | AF | 9C | A4 | 72 | C0 |
| 4  | B7 | FD | 93 | 26 | 36 | 3F | F7 | CC |
| 5  | 34 | A5 | E5 | F1 | 71 | D8 | 31 | 15 |
| 6  | 04 | C7 | 23 | C3 | 18 | 96 | 05 | 9A |
| 7  | 07 | 12 | 80 | E2 | EB | 27 | B2 | 75 |
| 8  | 09 | 83 | 2C | 1A | 1B | 6E | 5A | A0 |
| 9  | 52 | 3B | D6 | B3 | 29 | E3 | 2F | 84 |
| 10 | 53 | D1 | 00 | ED | 20 | FC | B1 | 5B |
| 11 | 6A | CB | BE | 39 | 4A | 4C | 58 | CF |
| 12 | D0 | EF | AA | FB | 43 | 4D | 33 | 85 |
| 13 | 45 | F9 | 02 | 7F | 50 | 3C | 9F | A8 |
| 14 | 51 | A3 | 40 | 8F | 92 | 9D | 38 | F5 |
| 15 | BC | B6 | DA | 21 | 10 | FF | F3 | D2 |
| 16 | CD | 0C | 13 | EC | 5F | 97 | 44 | 17 |
| 17 | C4 | A7 | 7E | 3D | 64 | 5D | 19 | 73 |
| 18 | 60 | 81 | 4F | DC | 22 | 2A | 90 | 88 |
| 19 | 46 | EE | B8 | 14 | DE | 5E | 0B | DB |
| 20 | E0 | 32 | 3A | 0A | 49 | 06 | 24 | 5C |
| 21 | C2 | D3 | AC | 62 | 91 | 95 | E4 | 79 |
| 22 | E7 | C8 | 37 | 6D | 8D | D5 | 4E | A9 |
| 23 | 6C | 56 | F4 | EA | 65 | 7A | AE | 08 |
| 24 | BA | 78 | 25 | 2E | 1C | A6 | B4 | C6 |
| 25 | E8 | DD | 74 | 1F | 4B | BD | 8B | 8A |
| 26 | 70 | 3E | B5 | 66 | 48 | 03 | F6 | 0E |
| 27 | 61 | 35 | 57 | B9 | 86 | C1 | 1D | 9E |
| 28 | E1 | F8 | 98 | 11 | 69 | D9 | 8E | 94 |
| 29 | 9B | 1E | 87 | E9 | CE | 55 | 28 | DF |
| 30 | 8C | A1 | 89 | 0D | BF | E6 | 42 | 68 |
| 31 | 41 | 99 | 2D | 0F | B0 | 54 | BB | 16 |

## Fig. 7

```
-- GF(2^8) 8-bit Multiplier Block--
--********************************
library IEEE;
use IEEE.std_logic_1164.ALL;
use IEEE.std_logic_arith.ALL;
use IEEE.std_logic_unsigned.ALL;

package MultiplierTypes is
        type res8bitU is array(0 to 7) of std_logic_vector(8 downto 0);
        type res8bitS is array(0 to 8) of std_logic_vector(8 downto 0);
        type res7bitT is array(0 to 7) of std_logic_vector(7 downto 0);
end package;

library IEEE;
use IEEE.std_logic_1164.all;
use IEEE.numeric_std.all;
use work.MultiplierTypes.all;

entity Multiplier is
        port(   A,B : in std_logic_vector(7 downto 0);
                C : out std_logic_vector(7 downto 0));
end Multiplier;

architecture MultiplierSynth of Multiplier is

signal S : res8bitS;    -- array(0 to 8) of std_logic_vector(8 downto 0)
signal U : res8bitU;    -- array(0 to 7) of std_logic_vector(8 downto 0)
signal T : res7bitT;    -- array(0 to 7) of std_logic_vector(7 downto 0);
signal Z : res7bitT;    -- array(0 to 7) of std_logic_vector(7 downto 0);

begin
P1 : process(S,U,T,A,B)
  begin
  S(0) <= '0'&A;

  for i in 0 to 7 loop
      if S(i)(8) = '1' then
        U(i) <= S(i) xor '0'&x"1b";          --'1b' is Rijndael's Irreducible polynomial of degree 8
        T(i) <= U(i)(7 downto 0);
      else
        T(i) <= S(i)(7 downto 0);
        U(i) <= "000000000";
      end if;

      s(i+1) <= T(i) & '0';

      if B(i) = '1' then
        Z(i) <= T(i);
      else
        Z(i) <= x"00";
      end if;

  end loop;
end process;

C<= Z(0) xor Z(1) xor Z(2) xor Z(3) xor Z(4) xor Z(5) xor Z(6) xor Z(7) ;
```

## Fig. 8

**Fig. 9**

START

W[0] to W[5]
= Cipher Key

i = 6

Temp = W[i-1]

Is
i rem 6 = 0
?

NO

YES

R = RotByte(Temp)

i = i + 1

S = SubByte(R)

T = S
XOR Rcon[i/6]

W[i] = W[i-6]
XOR T

W[i] = W[i-6]
XOR Temp

YES

Is
i < 51 ?

NO

j = 0

RoundKey(j) =
W[4j] to W[4j+3)]

j = j+1

Is
j < 12 ?

YES

NO

STOP

Fig. 9a

Fig. 9b

27

|    | 0  | 1  | 2  | 3  | 4  | 5  | 6  | 7  |
|----|----|----|----|----|----|----|----|----|
| 0  | 52 | 09 | 6A | D5 | 30 | 36 | A5 | 38 |
| 1  | BF | 40 | A3 | 9E | 81 | F3 | D7 | FB |
| 2  | 7C | E3 | 39 | 82 | 9B | 2F | FF | 87 |
| 3  | 34 | 8E | 43 | 44 | C4 | DE | E9 | CB |
| 4  | 54 | 7B | 94 | 32 | A6 | C2 | 23 | 3D |
| 5  | EE | 4C | 95 | 0B | 42 | FA | C3 | 4E |
| 6  | 08 | 2E | A1 | 66 | 28 | D9 | 24 | B2 |
| 7  | 76 | 5B | A2 | 49 | 6D | 8B | D1 | 25 |
| 8  | 72 | F8 | F6 | 64 | 86 | 68 | 98 | 16 |
| 9  | D4 | A4 | 5C | CC | 5D | 65 | B6 | 92 |
| 10 | 6C | 70 | 48 | 50 | FD | ED | B9 | DA |
| 11 | 5E | 15 | 46 | 57 | A7 | 8D | 9D | 84 |
| 12 | 90 | D8 | AB | 00 | 8C | BC | D3 | 0A |
| 13 | F7 | E4 | 58 | 05 | B8 | B3 | 45 | 06 |
| 14 | D0 | 2C | 1E | 8F | CA | 3F | 0F | 02 |
| 15 | C1 | AF | BD | 03 | 01 | 13 | 8A | 6B |
| 16 | 3A | 91 | 11 | 41 | 4F | 67 | DC | EA |
| 17 | 97 | F2 | CF | CE | F0 | B4 | E6 | 73 |
| 18 | 96 | AC | 74 | 22 | E7 | AD | 35 | 85 |
| 19 | E2 | F9 | 37 | E8 | 1C | 75 | DF | 6E |
| 20 | 47 | F1 | 1A | 71 | 1D | 29 | C5 | 89 |
| 21 | 6F | B7 | 62 | 0E | AA | 18 | BE | 1B |
| 22 | FC | 56 | 3E | 4B | C6 | D2 | 79 | 20 |
| 23 | 9A | DB | C0 | FE | 78 | CD | 5A | F4 |
| 24 | 1F | D0 | A8 | 33 | 88 | 07 | C7 | 31 |
| 25 | B1 | 12 | 10 | 59 | 27 | 80 | EC | 5F |
| 26 | 60 | 51 | 7F | A9 | 19 | B5 | 4A | 0D |
| 27 | 2D | E5 | 7A | 9F | 93 | C9 | 9C | EF |
| 28 | A0 | E0 | 3B | 4D | AE | 2A | F5 | B0 |
| 29 | C8 | EB | BB | 3C | 83 | 53 | 99 | 61 |
| 30 | 17 | 2B | 04 | 7E | BA | 77 | D6 | 26 |
| 31 | E1 | 69 | 14 | 63 | 55 | 21 | 0C | 7D |

## Fig. 10

Fig. 12a

Fig. 12b

Fig. 13

|    | 0  | 1  | 2  | 3  | 4  | 5  | 6  | 7  |
|----|----|----|----|----|----|----|----|----|
| 0  | C6 | F8 | EE | F6 | FF | D6 | DE | 91 |
| 1  | 60 | 02 | CE | 56 | E7 | B5 | 4D | EC |
| 2  | 8F | 1F | 89 | FA | EF | B2 | 8E | FB |
| 3  | 41 | B3 | 5F | 45 | 23 | 53 | E4 | 9B |
| 4  | 75 | E1 | 3D | 4C | 6C | 7E | F5 | 83 |
| 5  | 68 | 51 | D1 | F9 | E2 | AB | 62 | 2A |
| 6  | 08 | 95 | 46 | 9D | 30 | 37 | 0A | 2F |
| 7  | 0E | 24 | 1B | DF | CD | 4E | 7F | EA |
| 8  | 12 | 1D | 58 | 34 | 36 | DC | B4 | 5B |
| 9  | A4 | 76 | B7 | 7D | 52 | DD | 5E | 13 |
| 10 | A6 | B9 | 00 | C1 | 40 | E3 | 79 | B6 |
| 11 | D4 | 8D | 67 | 72 | 94 | 98 | B0 | 85 |
| 12 | BB | C5 | 4F | ED | 86 | 9A | 66 | 11 |
| 13 | 8A | E9 | 04 | FE | A0 | 78 | 25 | 4B |
| 14 | A2 | 5D | 80 | 05 | 3F | 21 | 70 | F1 |
| 15 | 63 | 77 | AF | 42 | 20 | E5 | FD | BF |
| 16 | 81 | 18 | 26 | C3 | BE | 35 | 88 | 2E |
| 17 | 93 | 55 | FC | 7A | C8 | BA | 32 | E6 |
| 18 | C0 | 19 | 9E | A3 | 44 | 54 | 3B | 0B |
| 19 | 8C | C7 | 6B | 28 | A7 | BC | 16 | AD |
| 20 | DB | 64 | 74 | 14 | 92 | 0C | 48 | B8 |
| 21 | 9F | BD | 43 | C4 | 39 | 31 | D3 | F2 |
| 22 | D5 | 8B | 6E | DA | 01 | B1 | 9C | 49 |
| 23 | D8 | AC | F3 | CA | CF | F4 | 47 | 10 |
| 24 | 6F | F0 | 4A | 5C | 38 | 57 | 73 | 97 |
| 25 | CB | A1 | E8 | 3E | 96 | 61 | 0D | 0F |
| 26 | E0 | 7C | 71 | CC | 90 | 06 | F7 | 1C |
| 27 | C2 | 6A | AE | 69 | 17 | 99 | 3A | 27 |
| 28 | D9 | EB | 2B | 22 | D2 | A9 | 07 | 33 |
| 29 | 2D | 3C | 15 | C9 | 87 | AA | 50 | A5 |
| 30 | 03 | 59 | 09 | 1A | 65 | D7 | 84 | D0 |
| 31 | 82 | 29 | 5A | 1E | 7B | A8 | 6D | 2C |

## Fig. 14

|    | 0  | 1  | 2  | 3  | 4  | 5  | 6  | 7  |
|----|----|----|----|----|----|----|----|----|
| 0  | A5 | 84 | 99 | 8D | 0D | BD | B1 | 54 |
| 1  | 50 | 03 | A9 | 7D | 19 | 62 | E6 | 9A |
| 2  | 45 | 9D | 40 | 87 | 15 | EB | C9 | 0B |
| 3  | EC | 67 | FD | EA | BF | F7 | 96 | 5B |
| 4  | C2 | 1C | AE | 6A | 5A | 41 | 02 | 4F |
| 5  | 5C | F4 | 34 | 08 | 93 | 73 | 53 | 3F |
| 6  | 0C | 52 | 65 | 5E | 28 | A1 | 0F | B5 |
| 7  | 09 | 36 | 9B | 3D | 26 | 69 | CD | 9F |
| 8  | 1B | 9E | 74 | 2E | 2D | B2 | EE | FB |
| 9  | F6 | 4D | 61 | CE | 7B | 3E | 71 | 97 |
| 10 | F5 | 68 | 00 | 2C | 60 | 1F | C8 | ED |
| 11 | BE | 46 | D9 | 4B | DE | D4 | E0 | 4A |
| 12 | 6B | 2A | E5 | 16 | C5 | D7 | 55 | 94 |
| 13 | CF | 10 | 06 | 81 | F0 | 44 | BA | E3 |
| 14 | F3 | FE | C0 | 8A | AD | BC | 48 | 04 |
| 15 | DF | C1 | 75 | 63 | 30 | 1A | 0E | 6D |
| 16 | 4C | 14 | 35 | 2F | E1 | A2 | CC | 39 |
| 17 | 57 | F2 | 82 | 47 | AC | E7 | 2B | 95 |
| 18 | A0 | 98 | D1 | 7F | 66 | 7E | AB | 83 |
| 19 | CA | 29 | D3 | 3C | 79 | E2 | 1D | 76 |
| 20 | 3B | 56 | 4E | 1E | DB | 0A | 6C | E4 |
| 21 | 5D | 6E | EF | A6 | A8 | A4 | 37 | 8B |
| 22 | 32 | 43 | 59 | B7 | 8C | 64 | D2 | E0 |
| 23 | B4 | FA | 07 | AF | 25 | 8E | E9 | 18 |
| 24 | D5 | 88 | 6F | 72 | 24 | F1 | C7 | 51 |
| 25 | 23 | 7C | 9C | 21 | DD | DC | 86 | 85 |
| 26 | 90 | 42 | C4 | AA | D8 | 05 | 01 | 12 |
| 27 | A3 | 5F | F9 | D0 | 91 | 58 | 27 | B9 |
| 28 | 38 | 13 | B3 | 33 | BB | 70 | 89 | A7 |
| 29 | B6 | 22 | 92 | 20 | 49 | FF | 78 | 7A |
| 30 | 8F | F8 | 80 | 17 | DA | 31 | C6 | B8 |
| 31 | C3 | B0 | 77 | 11 | CB | FC | D6 | 3A |

Fig. 15

Fig. 16

EP 1 246 389 B1